# EUROPÄISCHE PATENTSCHRIFT

(11) **EP 3 843 940 B1**
(45) Veröffentlichungstag und Bekanntmachung des Hinweises auf die Patenterteilung: **11.10.2023**
(21) Anmeldenummer: 19762938.9
(22) Anmeldetag: 30.08.2019
(51) Int. Cl.: B23Q 7/14, B23Q 39/00

(54) **WERKZEUGMASCHINE ZUM SPANENDEN BEARBEITEN EINES WERKSTÜCKS**
MACHINE TOOL FOR MACHINING A WORKPIECE
MACHINE-OUTIL POUR L'USINAGE D'UNE PIÈCE

(30) Priorität: 30.08.2018 DE 102018214794; 18.01.2019 DE 102019200661
(43) Veröffentlichungstag der Anmeldung: 07.07.2021
(60) Teilanmeldung: 23195398.5
(73) Patentinhaber: DECKEL MAHO Pfronten GmbH, 87459 Pfronten (DE)
(72) Erfinder: Geißler, Alfred, 87459 Pfronten (DE); Trenkle, Michael, 87459 Pfronten (DE); Riedel, Sebastian, 87637 Eisenberg (DE)
(74) Vertreter: MERH-IP Matias Erny Reichl Hoffmann Patentanwälte PartG mbB
(86) Internationale Anmeldenummer: PCT/EP2019/073284
(87) Internationale Veröffentlichungsnummer: WO 2020/043916

(56) Entgegenhaltungen:
- EP-A1- 1 693 149
- EP-A1- 2 633 951
- EP-A1- 3 290 163
- WO-A1-2017/220339
- DE-A1- 19 654 536
- DE-B3-102016 210 042
- DE-T5-112016 001 314
- JP-A- H01 257 543
- US-A1- 2016 214 225
- STIERLE H: "FAHRERLOSE TRANSPORTFAHRZEUGE OHNE LEITLINIEN - EINE NEUE DIMENSION IM MATERIALFLUSS", ZWF ZEITSCHRIFT FUR WIRTSCHAFTLICHE FERTIGUNG UNDAUTOMATISIERUNG, CARL HANSER VERLAG. MUNCHEN, DE, Bd. 86, Nr. 12, 1. Dezember 1991 (1991-12-01), Seiten 632-636, XP000258378, ISSN: 0947-0085

## Beschreibung

Die vorliegende Erfindung betrifft eine Werkzeugmaschine zum spanenden Bearbeiten eines Werkstücks. Des Weiteren betrifft die vorliegende Erfindung ein System mit einer oder mehreren Werkzeugmaschinen.

### HINTERGRUND DER ERFINDUNG

Transportfahrzeuge zum Aufnehmen und Transportieren von Gütern innerhalb einer Werkhalle sind bekannt. Hierbei sind der Gabelstapler und der zum Teil motorisierte Hubwagen die bekanntesten Beispiele. Dabei ist es ein erklärtes Ziel bei solchen Zulieferungen durch entsprechende Fahrzeuge, den Automatisierungsgrad immer weiter zu erhöhen und bevorzugt die Zulieferungen mit den Produktionsprozessen zu synchronisieren.

Hierfür werden bevorzugt fahrerlose Transportsysteme, kurz FTS, eingesetzt, welche neben fahrerlosen Transportfahrzeugen, kurz FTF, auch festgelegte Plätze zum Aufnehmen oder Ablegen von Transportgut durch die Transportfahrzeuge aufweisen, gegebenenfalls auch spezifisch eingerichtete Plätze oder Haltepunkte, um zum Beispiel das Transportgut für den bevorstehenden Fertigungsprozess vorzubereiten.

In der JP H01257543 A ist hierzu beispielsweise ein Kombination aus einem fahrerlosen Transportfahrzeug (FTF) und einer stationär aufgestellten Werkzeugmaschine gezeigt, wobei das FTF einen Werkzeugspeicher mit Werkzeugen für die Werkzeugmaschine umfasst und entlang einer Führungsvorrichtung zur Werkzeugmaschine verfahren werden kann, um dort einen Werkzeugwechsel vorzunehmen.

Nachteilig erweisen sich hierbei jedoch FTS, bei denen die Transportfahrzeuge durch ein Schienensystem zu den jeweiligen Stationen geführt werden. Nicht nur, dass ein solches Schienensystem sehr aufwendig ist im Hinblick auf Fertigung, Aufbau sowie Ausrichtung der Schienen und Schienensegmente zueinander. Es ist auch immer nur für den einen konkreten Fall konzipiert und kann daher nicht kurzfristig auf Änderungen der Positionen der Plätze oder des Produktionsablaufes reagieren bzw. angepasst werden.

Derartige Systeme sind daher immens nachteilig im Hinblick auf Flexibilität.

Weiterhin bieten die derzeit bekannten FTS den Nachteil, dass die FTF in der Regel der Fälle keine Möglichkeit aufweisen, ein Werkstück direkt auf dem FTF bearbeiten zu lassen, um eine flexible und damit effektive Produktion/Bearbeitung von Werkstücken zu gewährleisten.

### ZUSAMMENFASSUNG DER ERFINDUNG

Eine Aufgabe der vorliegenden Erfindung ist es daher, eine Werkzeugmaschine zum spanenden Bearbeiten eines Werkstücks bereitzustellen, mit der die obigen Probleme vermieden werden.

Des Weiteren ist es Aufgabe der vorliegenden Erfindung, ein System mit einer oder mehreren Werkzeugmaschinen bereitzustellen.

Diese Aufgaben werden gelöst durch eine Werkzeugmaschine nach Anspruch 1 und ein System nach Anspruch 15. Die abhängigen Ansprüche beziehen sich auf vorteilhafte Ausführungsbeispiele der erfindungsgemäßen Werkzeugmaschine und des erfindungsgemäßen Systems.

Die erfindungsgemäße Werkzeugmaschine zum spanenden Bearbeiten eines Werkstücks umfasst zumindest einen auf einer Grundfläche verfahrbaren ersten Werkzeugmaschinenaufbau, der ein fahrerloses Transportfahrzeug umfasst, und zumindest einen auf der Grundfläche aufstellbaren, stationären zweiten Werkzeugmaschinenaufbau, der eine werkzeugtragende Arbeitsspindel aufweist. Das fahrerlose Transportfahrzeug des ersten Werkzeugmaschinenaufbaus ist eingerichtet, zur Positionierung des ersten Werkzeugmaschinenaufbaus am zweiten Werkzeugmaschinenaufbau unabhängig von einer Art Schienensystem oder dergleichen auf der Grundfläche frei verfahren zu werden. Die Werkzeugmaschine ist als modulare Werkzeugmaschine ausgeführt, dergestalt, dass der erste Werkzeugmaschinenaufbau und der zweite Werkzeugmaschinenaufbau zusammen die zur Bearbeitung eines Werkstücks eingerichtete Werkzeugmaschine ausbilden, wenn der erste Werkzeugmaschinenaufbau an dem zweiten Werkzeugmaschinenaufbau positioniert ist, wobei der erste Werkzeugmaschinenaufbau einen Werkstückspanneinrichtung umfasst, und die Werkzeugmaschine zur Bearbeitung eines auf dem ersten Werkzeugmaschinenaufbau aufgespannten Werkstücks durch die werkzeugtragende Arbeitsspindel des zweiten Werkzeugmaschinenaufbaus eingerichtet ist, nachdem der erste Werkzeugmaschinenaufbau verfahren und am zweiten Werkzeugmaschinenaufbau positioniert wurde.

Durch die erfindungsgemäße Werkzeugmaschine konnte das Konzept einer modularen Werkzeugmaschine, die nicht mehr fest aus einem Maschinentisch und einer in mehreren Achsen relativ zu dem Maschinentisch verfahrbaren Spindeleinheit bestehen muss, umgesetzt werden.

Diese birgt den immensen Vorteil, dass nun in beliebiger Weise ein bereits bestehendes Maschinenkonzept um weitere Bearbeitungsmöglichkeiten erweitert bzw. ergänzt werden kann. Zudem kann durch die relativ zueinander beweglichen und x-beliebig positionierbaren Module an jeder erdenklichen Stelle in der Werkhalle eine Werkzeugmaschine bzw. ein Bearbeitungszentrum entstehen, so dass auch hier auf individuelle Anforderungen der Fertigungsprozesse und der Fertigungskette eingegangen werden kann.

Hierdurch besteht nun die Möglichkeit, Fertigungsschritte flexibel zu planen und ortsungebunden durchzuführen.

Durch das fahrerlose Transportfahrzeug kann es vorteilhaft ermöglicht werden, den Automatisierungsgrad der gesamten Fertigung um ein Vielfaches zu steigern, da die Koordinierung und allgemein die Steuerung der fahrerlosen Transportfahrzeuge bzw. Transporteinrichtungen beispielsweise durch eine zentrale Rechner-/Steuereinrichtung übernommen werden kann, so dass hier ein Werker vorrangig eine überwachende Funktion einnehmen kann.

Insbesondere kann durch die Ausgestaltung der erfindungsgemäßen Werkzeugmaschine eine individuelle und freie Positionierung der Werkzeugmaschinenaufbauten zueinander erfolgen, ohne dabei auf eine Art Schienensystem oder dergleichen angewiesen zu sein.

Je nach Anforderung an das Layout der Fertigung, sind stationäre Module so ausgebildet, dass die mobilen Module an diese heranfahren können um den entsprechenden Fertigungsschritt durchzuführen.

Eine besonders vorteilhafte Weiterbildung der erfindungsgemäßen Werkzeugmaschine besteht darin, dass zumindest eine weiterer verfahrbarer Werkzeugmaschinenaufbau und der zumindest eine verfahrbare erste Werkzeugmaschinenaufbau zusammen eine zur Bearbeitung des Werkstücks eingerichtete Werkzeugmaschine ausbilden, wenn der zumindest eine verfahrbare erste Werkzeugmaschinenaufbau an dem zumindest einen weiteren verfahrbaren Werkzeugmaschinenaufbau positioniert ist.

Hierdurch können nun sämtliche Module der modularen Werkzeugmaschine frei im Raum und zueinander positioniert werden, um ein Maximum an Flexibilität bei der Abarbeitung der Fertigungsaufträge zu gewährleisten und jegliche erdenkliche Konstellation und Kombination von Modulen der modularen Werkzeugmaschine zu ermöglichen.

Die erfindungsgemäße Werkzeugmaschine kann dadurch vorteilhaft weitergebildet werden, dass die Werkzeugmaschine zur bohrenden und/oder fräsenden Werkstückbearbeitung eingerichtet ist.

Hierdurch können nun verschiedenste Maschinenkonzepte zur fräsenden oder bohrenden Bearbeitung eines Werkstücks umgesetzt werden.

Überdies kann die erfindungsgemäße Werkzeugmaschine dadurch vorteilhaft weitergebildet werden, dass die Werkzeugmaschine zur drehenden Werkstückbearbeitung eingerichtet ist.

Hierdurch können nun verschiedenste Maschinenkonzepte zur drehenden Bearbeitung eines Werkstücks umgesetzt werden.

Eine weitere sehr vorteilhafte Weiterbildung der erfindungsgemäßen Werkzeugmaschine besteht darin, dass die Werkzeugmaschine zur materialauftragenden Werkstückbearbeitung eingerichtet ist, wobei die zumindest eine zweite Werkzeugmaschinenaufbau eine Material auftragende Bearbeitungseinheit aufweist.

Hierdurch kann nun neben der fräsenden/bohrenden und der drehenden Bearbeitung, die ja für den Materialabtrag am Werkstück zum Einsatz kommen, aber eben auch Material auf das Werkstück aufgetragen werden. Durch entsprechende Verfahren wie Laser-Auftragschweißen oder auch anderen Verfahren können so, direkt am Ort des Werkstücks, weitere Materialschichten oder Materialbereiche auf das Werkstück aufgetragen werden.

Zudem kann die erfindungsgemäße Werkzeugmaschine dadurch vorteilhaft weitergebildet werden, dass der zumindest eine zweite Werkzeugmaschinenaufbau ein Maschinengestell aufweist, an dem ein oder mehrere Werkzeugmaschinenbauteile angeordnet sind.

Zudem kann die erfindungsgemäße Werkzeugmaschine dadurch vorteilhaft weitergebildet werden, dass der zumindest eine zweite Werkzeugmaschinenaufbau ein oder mehrere an dem Maschinengestell verfahrbare Werkzeugmaschinenschlitten aufweist.

Hierdurch können nun die Werkzeugmaschinenbauteile entlang verschiedener Richtungen, bevorzugt entlang der x-, y- und der z-Richtung, verfahren werden, um verschiedene Zustellbewegungen der Werkzeugmaschinenbauteile untereinander und auch übergreifend zwischen den einzelnen Werkzeugmaschinenaufbauten zu ermöglichen.

Weiterhin kann aber auch die erfindungsgemäße Werkzeugmaschine dadurch vorteilhaft weitergebildet werden, dass zumindest einer der einen oder mehreren Werkzeugmaschinenschlitten eine Arbeitsspindel oder einen eine Arbeitsspindel tragenden Spindelkopf oder Spindelschwenkkopf trägt.

Weiterhin kann aber auch die erfindungsgemäße Werkzeugmaschine dadurch vorteilhaft weitergebildet werden, dass das Maschinengestell in Portalbauweise, in Fahrständerbauweise oder in Konsolbauweise ausgestaltet ist.

Neben verschiedenen Zustellbewegungen können hierdurch auch verschiedene Grundtypen von Werkzeugmaschinen als modulare Werkzeugmaschine realisiert werden, je nach dem, welche Anwendung bzw. Bearbeitung erforderlich ist.

Weiterhin kann aber auch die erfindungsgemäße Werkzeugmaschine dadurch vorteilhaft weitergebildet werden, dass zumindest einer der einen oder mehreren Werkzeugmaschinenschlitten eine Horizontalbearbeitungs-Arbeitsspindel und/oder eine Vertikalbearbeitungs-Arbeitsspindel trägt.

Weiterhin kann aber auch die erfindungsgemäße Werkzeugmaschine dadurch vorteilhaft weitergebildet werden, dass die Horizontalbearbeitungs-Arbeitsspindel und/oder die Vertikalbearbeitungs-Arbeitsspindel des zumindest einen der einen oder mehreren Werkzeugmaschinenschlitten durch eine zusätzliche Rotationsachse schwenkbar zu dem einen oder mehreren Werkzeugmaschinenschlitten ausgebildet ist.

Hierdurch kann in besonders vorteilhafter Weise ein Vertikal-Bearbeitungszentrum in ein Horizontal-Bearbeitungszentrum umgewandelt werden, was zusätzlich die Flexibilität bei der Fertigung von Bauteilen/Werkstücken erhöht.

Weiterhin kann aber auch die erfindungsgemäße Werkzeugmaschine dadurch vorteilhaft weitergebildet werden, dass die Werkstückspanneinrichtung des zumindest einen verfahrbare ersten Werkzeugmaschinenaufbaus ein Werkstückspanntisch ist, der insbesondere als Drehtisch, Rundtisch und/oder Schwenk-/Rundtisch ausgebildet ist.

Auch diese Weiterbildung ermöglicht einen höheren Grad an Flexibilität für die Fertigung bzw. Bearbeitung von Werkstücken.

Weiterhin kann eine vorteilhafte Weiterbildung der erfindungsgemäßen Werkzeugmaschine erreicht werden durch: einen Antrieb zum Verfahren des Transportfahrzeugs, und eine Steuereinheit zum Steuern des Transportfahrzeugs.

Weiterhin kann aber auch die erfindungsgemäße Werkzeugmaschine dadurch vorteilhaft weitergebildet werden, dass der zumindest eine verfahrbare erste Werkzeugmaschinenaufbau eine Andockeinrichtung aufweist und dazu eingerichtet ist, mittels der Andockeinrichtung an einer auf der Grundfläche installierten Andockstation einer Werkzeugmaschine oder an einer Andockstation des zumindest einen zweiten Werkzeugmaschinenaufbaus zum Ausbilden der Werkzeugmaschine zusammen mit dem zweiten Werkzeugmaschinenaufbau anzudocken.

Weiterhin kann aber auch die erfindungsgemäße Werkzeugmaschine dadurch vorteilhaft weitergebildet werden, dass der zumindest eine verfahrbare erste Werkzeugmaschinenaufbau zusammen mit dem zumindest einen zweiten Werkzeugmaschinenaufbau die zur Bearbeitung des Werkstücks eingerichtete Werkzeugmaschine ausbilden, wenn der zumindest eine verfahrbare erste Werkzeugmaschinenaufbau an der Andockstation des zumindest einen zweiten Werkzeugmaschinenaufbaus angedockt ist.

Weiterhin kann aber auch die erfindungsgemäße Werkzeugmaschine dadurch vorteilhaft weitergebildet werden, der zumindest eine verfahrbare erste Werkzeugmaschinenaufbau weiterhin dazu eingerichtet ist, mittels der Andockeinrichtung an einer auf der Grundfläche installierten Andockstation einer weiteren Werkzeugmaschine anzudocken.

Weiterhin kann aber auch die erfindungsgemäße Werkzeugmaschine dadurch vorteilhaft weitergebildet werden, dass der zumindest eine verfahrbare erste Werkzeugmaschinenaufbau weiterhin dazu eingerichtet ist, mittels der Andockeinrichtung an einer Andockstation zumindest eines dritten Werkzeugmaschinenaufbaus zum Ausbilden einer weiteren Werkzeugmaschine anzudocken.

Über verschiedenste Andockstationen können die verfahrbaren Werkzeugmaschinenaufbauten mit den Werkzeugmaschinen kommunizieren und aber auch Energie übertragen. Insbesondere eignet es sich hierfür, die Andockstation auf der Grundfläche vorzusehen, da hier die verfahrbaren Werkzeugmaschinenaufbauten problemlos hinfahren können und sich im Anschluss daran über ihre Andockeinrichtungen mit den Andockstationen auf der Grundfläche verbinden können.

Weiterhin kann aber auch die erfindungsgemäße Werkzeugmaschine dadurch vorteilhaft weitergebildet werden, dass der zumindest eine verfahrbare erste Werkzeugmaschinenaufbau weiterhin dazu eingerichtet ist, zusammen mit dem zumindest einen dritten Werkzeugmaschinenaufbau eine weitere zur Bearbeitung des Werkstücks eingerichtete Werkzeugmaschine auszubilden, wenn der zumindest eine verfahrbare erste Werkzeugmaschinenaufbau an der Andockstation des zumindest einen dritten Werkzeugmaschinenaufbaus angedockt ist.

Weiterhin kann aber auch die erfindungsgemäße Werkzeugmaschine dadurch vorteilhaft weitergebildet werden, dass die Andockeinrichtung der Transporteinrichtung dazu eingerichtet ist, die Transporteinrichtung zum Andocken an der Andockstation anzuheben und/oder abzusenken.

Hierdurch kann nun in vorteilhafter Weise die Transporteinrichtung auf der Andockstation der Grundfläche abgesetzt werden und ein Verbindungsschluss ermöglicht werden.

Das erfindungsgemäße System umfasst eine oder mehrere der erfindungsgemäßen Werkzeugmaschinen.

Durch die erfindungsgemäße Werkzeugmaschine kann der Produktions- und Bearbeitungsprozess von Werkstücken deutlich flexibler gestaltet werden. Zudem kann die erfindungsgemäße Werkzeugmaschine sowohl bei bereits bestehenden Fertigungsstrukturen integriert werden, als auch für völlig neue Abläufe bei der Fertigung und Bearbeitung von Werkstücken verwendet werden.

Zudem sollen im Folgenden Beispiele einer Transporteinrichtung, die beispielsweise als Transportfahrzeug des verfahrbaren ersten Werkzeugmaschinenaufbaus eingesetzt werden kann und zum Einsatz an einer beispielhaft beschriebenen Werkzeugmaschine eingerichtet ist, und ihre jeweiligen Vorteile beschrieben werden.

Eine beispielhafte Transporteinrichtung zum Transportieren einer Handhabungseinrichtung zur Handhabung einer Palette und/oder eines Werkstücks an eine Werkzeugmaschine zur spanenden Bearbeitung des Werkstücks, wobei die Werkzeugmaschine eine Arbeitsspindel zum Aufnehmen eines Werkzeugs oder des Werkstücks und eine Palette zum Aufnehmen des Werkzeugs oder des Werkstücks aufweist, ist ferner dazu eingerichtet, die Handhabungseinrichtung innerhalb eines Bereiches vor einem Arbeitsraum der Werkzeugmaschine entlang der den Bereich aufspannenden Raumrichtungen zu positionieren. Die beispielhafte Transporteinrichtung ist dabei als ein fahrerloses Transportfahrzeug ausgebildet mit einer Plattform, die mehrere Aufnahmevorrichtungen zum Aufnehmen von Handhabungseinrichtungen aufweist, einem Antrieb zum Bewegen der Plattform, und einer Steuereinheit zum Steuern der Aufnahmevorrichtungen und des Antriebs der Plattform

Durch die beispielhafte Transporteinrichtung ist es nun möglich, gänzlich auf Schienensysteme zur Führung der Transportfahrzeuge zu verzichten, da die Transportfahrzeuge sich frei auf einer Ebene wie dem Hallenboden bewegen können.

Zusätzlich können hierdurch die Fahrzeuge und ihre "Fahrbahnen" individuell an die Gegebenheiten angepasst werden und ermöglichen so eine deutliche Steigerung der Flexibilität in Produktion und Logistik.

Um den Automatisierungsgrad zu erhöhen, ist die beispielhafte Transporteinrichtung als fahrerloses Transportfahrzeug mit entsprechender Steuerung und Vernetzung ausgebildet, so dass auch mehrere Transportfahrzeuge / Transporteinrichtungen aufeinander abgestimmt bewegt werden können.

Weiterhin verfügt die beispielhafte Transporteinrichtung über eine Vielzahl an Schnittstellen, an diesen verschiedenste Handhabungseinrichtungen wie Palettenwechsler, Roboter, Behälter und Boxen etc. aufgenommen werden können, was dadurch weiterhin die Flexibilität im Produktionsprozess wie auch im Bereich der Logistik steigern kann.

Die beispielhafte Transporteinrichtung kann dadurch vorteilhaft weitergebildet werden, dass an zumindest einer Seite der Transporteinrichtung mindestens eine Aufnahmevorrichtung vorgesehen ist, vorzugsweise an mindestens zwei Seiten der Transporteinrichtung mindestens eine Aufnahmevorrichtung vorgesehen ist, und besonders bevorzugt an jeder Seite der Transporteinrichtung mindestens eine Aufnahmevorrichtung vorgesehen ist.

Hierdurch können nun deutlich mehr technische Vorrichtungen und/oder Behälter zu ihrem jeweiligen Bestimmungsort mit nur einer Fahrt gebracht werden, als dies bei bisher bekannten Transportfahrzeugen möglich ist.

Die beispielhafte Transporteinrichtung kann dadurch vorteilhaft weitergebildet werden, dass die Transporteinrichtung ferner dazu eingerichtet ist, die Handhabungseinrichtung nach der Positionierung an der Werkzeugmaschine abzusetzen.

Diese Möglichkeit ist dahingehend besonders vorteilhaft, da die Transporteinrichtung nicht mit der Handhabungseinrichtung an Ort und Stelle verbleiben muss, sondern weitere Handhabungseinrichtungen transportieren kann, während z.B. die abgesetzte Handhabungseinrichtung ihre Funktion an der jeweiligen Werkzeugmaschine ausführt.

Die beispielhafte Transporteinrichtung kann dadurch vorteilhaft weitergebildet werden, dass die Aufnahmevorrichtungen ferner Anschlusselemente aufweisen, die für eine Übertragung von Steuerungssignalen und/oder Energie von der Transporteinrichtung an die Handhabungseinrichtung eingerichtet sind.

Hierdurch können in vorteilhafter Weise Energie und Signale zur Steuerung der Handhabungseinrichtung von der Transporteinrichtung an die Handhabungseinrichtung übertragen werden.

Die beispielhafte Transporteinrichtung kann dadurch vorteilhaft weitergebildet werden, dass die Anschlusselemente der Aufnahmevorrichtungen der Transporteinrichtung bei der Aufnahme der Handhabungseinrichtung eine Verbindung mit der Handhabungseinrichtung zur Übertragung von Steuerungssignalen und/oder Energie automatisch herstellen.

Hierdurch entfällt das händische Eingreifen eines Werkarbeiters und der Automatisierungsgrad der Produktions- und Logistikabläufe kann weiter gesteigert werden.

Die beispielhafte Transporteinrichtung kann dadurch vorteilhaft weitergebildet werden, dass die Aufnahmevorrichtungen jeweils eine Kontrollvorrichtung zum Überwachen des Zustands der Aufnahme der jeweiligen Handhabungseinrichtung aufweisen.

Die beispielhafte Transporteinrichtung kann dadurch vorteilhaft weitergebildet werden, dass die Kontrollvorrichtung dazu eingerichtet ist, die Steuerungssignale, die Energieübertragung, und/oder einen Arretierzustand der an der jeweiligen Aufnahmevorrichtung aufgenommenen Handhabungseinrichtung zu überwachen.

Dies ist insbesondere dahingehend von Vorteil, um eventuell auftretende Fehlfunktionen der Handhabungseinrichtungen zu vermeiden und um die Sicherheit der Handhabungseinrichtung an der Transporteinrichtung wie auch die Sicherheit der Werkarbeiter in unmittelbarer Nähe der Handhabungseinrichtung zu gewährleisten.

Zudem können hierdurch fehlerhafte Aufnahmen bzw. fehlerhafte Bestandteile (beschädigte Kontakte der Verbindungen für Energie- und/oder Signalübertragung etc.) schneller lokalisiert werden und entsprechend schneller ausgetauscht/ repariert werden.

Die beispielhafte Transporteinrichtung kann dadurch vorteilhaft weitergebildet werden, dass die Handhabungseinrichtung ein Palettenwechsler zum Ein- und Auswechseln der Palette in der Werkzeugmaschine ist, und der Palettenwechsler für das Ein- und Auswechseln der Palette im Arbeitsraum und/oder auf einem Rüstplatz der Werkzeugmaschine eingerichtet ist.

Insbesondere ist es von Vorteil, wenn die Handhabungseinrichtung, die durch die Transporteinrichtung transportiert werden kann, ein Palettenwechsler ist. Hierdurch können verschiedene Paletten mit nur einem Palettenwechsler und einer Transporteinrichtung zu den einzelnen Werkzeugmaschinen transportiert und eingelegt bzw. ausgetauscht werden.

Die beispielhafte Transporteinrichtung kann dadurch vorteilhaft weitergebildet werden, dass der Palettenwechsler zur Aufnahme der Palette eine Aufnahmeklaue oder eine gabelförmige Aufnahme aufweist.

Die beispielhafte Transporteinrichtung kann dadurch vorteilhaft weitergebildet werden, dass die Aufnahmevorrichtungen der Transporteinrichtung ferner zur Aufnahme von Materialträgern, insbesondere Gitterboxen mit Rohteilen und/oder Fertigteilen, und zur Aufnahme eines Wechselgreifers eingerichtet sind.

Die beispielhafte Transporteinrichtung kann dadurch vorteilhaft weitergebildet werden, dass die Aufnahmevorrichtungen der Transporteinrichtung einheitlich ausgebildet sind.

Insbesondere ist es von Vorteil, wenn die Aufnahmevorrichtungen, durch die die Handhabungseinrichtungen wie Palettenwechsler, Roboter, Materialpaletten, Gitterboxen etc. von der Transporteinrichtung aufgenommen werden können, einheitlich, also standardisiert sind. Hierdurch können alle erdenklichen Handhabungseinrichtungen mit einer und dergleichen Schnittstelle versehen werden, so dass auch, egal welche Handhabungseinrichtung aufgenommen werden soll, die Herstellung der Verbindung für Energie- und/oder Signalübertragung automatisiert erfolgen kann.

Eine beispielhafte, mit der beispielhaften Transporteinrichtung einsetzbare Werkzeugmaschine zur spanenden Bearbeitung eines Werkstücks, weist auf: eine Arbeitsspindel zum Aufnehmen eines Werkzeugs oder des Werkstücks, eine Palette zum Aufnehmen des Werkzeugs oder des Werkstücks, und eine Handhabungseinrichtung zur Handhabung der Palette und/oder des Werkstücks, wobei die Handhabungseinrichtung durch die beispielhafte Transporteinrichtung an der Werkzeugmaschine positionierbar ist.

Hierdurch bietet sich eine Reihe von Vorteilen, da die Transporteinrichtung jede beliebige Handhabungseinrichtung zu der Werkzeugmaschine bringen kann, welche für die jeweilig anstehenden Bearbeitungsschritte erforderlich oder gar notwendig ist. Dabei kann die Werkzeugmaschine, insbesondere die Bestückung mit Werkstücken und/oder Werkzeugen, einen höheren Automatisierungsgrad erreichen und Zeiten, in denen die Werkzeugmaschinen autonom arbeiten, verlängert werden.

Die beispielhafte Werkzeugmaschine kann dadurch vorteilhaft weitergebildet werden, dass die Werkzeugmaschine ferner Positioniereinrichtungen zur Lagepositionierung der Handhabungseinrichtung relativ zur Werkzeugmaschine aufweisen, für den Fall, dass die Handhabungseinrichtung durch die Transporteinrichtung an der Werkzeugmaschine abgesetzt wird.

Eine exakte Positionierung der Handhabungseinrichtung kann zum einen nicht nur vorteilhaft, sondern auch erforderlich sein. Zum Beispiel wenn Paletten sehr präzise auf eine Palettenaufnahme gesetzt werden müssen oder zum Beispiel Bestückungsarbeiten oder Nachbearbeitungen eines Werkstücks mit einem Roboter bei kleinen Toleranzen erfolgen müssen.

Die beispielhafte Werkzeugmaschine kann dadurch vorteilhaft weitergebildet werden, dass die Positioniereinrichtungen Anschlusselemente aufweisen, die für eine Übertragung von Steuerungssignalen und/oder Energie von der Werkzeugmaschine an die abgesetzte Handhabungseinrichtung eingerichtet sind.

Hierdurch können in vorteilhafter Weise Energie und Signale zur Steuerung der Handhabungseinrichtung von der Werkzeugmaschine an die Handhabungseinrichtung übertragen werden und so unabhängig von der Übertragung der Energie bzw. der Signale seitens der Transporteinrichtung sein.

Die beispielhafte Werkzeugmaschine kann dadurch vorteilhaft weitergebildet werden, dass die Anschlusselemente der Positioniereinrichtungen der Werkzeugmaschine bei Absetzen der Handhabungseinrichtung durch die Transporteinrichtung eine Verbindung mit der Handhabungseinrichtung zur Übertragung von Steuerungssignalen und/oder Energie automatisch herstellen.

Hierdurch kann vorteilhafterweise der Automatisierungsgrad weiter erhöht werden und ein händischen Eingreifen eines Werkarbeiters kann entfallen.

Durch den Einsatz der beispielhaften Transporteinrichtung konnte die Flexibilität in den Produktionsabläufen erheblich verbessert werden sowie schnell auf Veränderungen in der Produktion reagiert werden.

Weitere Aspekte und deren Vorteile als auch Vorteile und speziellere Ausführungsmöglichkeiten der vorstehend beschriebenen Aspekte und Merkmale werden aus den folgenden, jedoch in keinster Weise einschränkend aufzufassenden Beschreibungen und Erläuterungen zu den angehängten Figuren beschrieben.

### KURZBESCHREIBUNG DER FIGUREN

- Fig. 1: zeigt schematisch eine Ausführungsform einer als Transportfahrzeug für den ersten Werkzeugmaschinenaufbau einsetzbaren Transporteinrichtung mit Aufnahmevorrichtungen zum Aufnehmen von Handhabungseinrichtungen und ohne Werkstückspanneinrichtung.
- Fig. 2: zeigt schematisch eine Detailansicht einer Aufnahmevorrichtung zum Aufnehmen von Handhabungseinrichtungen.
- Fig. 3: zeigt schematisch eine Positionierung der Transporteinrichtung an einer Werkzeugmaschine mittels eines Prismas.
- Fig. 4a: zeigt schematisch eine Positionierung der Transporteinrichtung an einer Werkzeugmaschine mittels konischer Aufnahmen.
- Fig. 4b: zeigt schematisch eine weitere Ausführungsform der Transporteinrichtung bei einer Positionierung und Energie- und/oder Signalverbindungsschluss mittels konischer Aufnahmen.
- Fig. 4c: zeigt schematisch eine Transporteinrichtung, bei der exemplarisch ein Palettenhalter mit einer Palette mittels der Transporteinrichtung an eine Palettenhalteraufnahme andockt.
- Fig. 5a: zeigt schematisch eine Ausführungsform der Transporteinrichtung mit einer Höhenverstellung der Transporteinrichtung mittels Hubzylindern.
- Fig. 5b: zeigt schematisch eine weitere Ausführungsform der Transporteinrichtung mit einer Höhenverstellung der Transporteinrichtung mittels Hubzylindern und einem Fahrwerk.
- Fig. 6a: zeigt schematisch eine Ausführungsform der Transporteinrichtung mit einem exemplarisch aufgenommenen Palettenhalter und einer Palette.
- Fig. 6b: zeigt schematisch eine weitere Ausführungsform der Transporteinrichtung mit einem exemplarisch aufgenommenen Palettenhalter und einer Palette.
- Fig. 7: zeigt schematisch eine Ausführungsform der Transporteinrichtung mit einer Höhenverstellung der Aufnahmevorrichtung zur Aufnahme von Handhabungseinrichtungen der erfindungsgemäßen Transporteinrichtung.
- Fig. 8a: zeigt schematisch eine weitere Ausführungsform der Transporteinrichtung, die eine Palette in einen Arbeitsraum einer Werkzeugmaschine transportiert.
- Fig. 8b: zeigt schematisch eine weitere Ausführungsform der Transporteinrichtung, die eine Palette in einen Arbeitsraum einer Werkzeugmaschine transportiert.
- Fig. 9a: zeigt schematisch einen Hallenboden/Platte mit rasterförmig angeordneten Konen zur Positionierung der Transporteinrichtungen bzw. Handhabungseinrichtungen.
- Fig. 9b: zeigt eine weitere Möglichkeit, die Konen an der Unterseite der Transporteinrichtung für die Positionierung vorzusehen.
- Fig. 10: zeigt schematisch eine Ausführungsform der erfindungsgemäßen Werkzeugmaschine mit Transporteinrichtung mit einer Werkstückaufnahme für Großteile.
- Fig. 11: zeigt schematisch eine weitere Ausführungsform der erfindungsgemäßen Werkzeugmaschine mit Transporteinrichtung als Bestandteil verschiedener Maschinenkonzepte einer Werkzeugmaschine.
- Fig. 12a: zeigt schematisch eine Ausführungsform der erfindungsgemäßen Werkzeugmaschine mit Transporteinrichtung mit aufgenommener Palette an einer Konsolmaschine.
- Fig. 12b: zeigt schematisch eine weitere Ausführungsform der erfindungsgemäßen Werkzeugmaschine mit Transporteinrichtung als Bestandteil weiterer verschiedener Maschinenkonzepte einer Werkzeugmaschine.
- Fig. 12c: zeigt schematisch eine weitere Ausführungsform der erfindungsgemäßen Werkzeugmaschine mit Transporteinrichtung als Bestandteil weiterer verschiedener Maschinenkonzepte einer Werkzeugmaschine.
- Fig. 13: zeigt schematisch eine weitere Ausführungsform der Transporteinrichtung, die mehrere Paletten bzw. Werkstücke trägt, in exemplarischer Interaktion mit einen stationären Industrieroboter zur Handhabung der Werkstücke (links) und eine weitere Ausführungsform der Transporteinrichtung mit einem exemplarischen Fräsroboter (rechts).
- Fig. 14: zeigt schematisch eine weitere Ausführungsform der erfindungsgemäßen Werkzeugmaschine mit mehreren Transporteinrichtungen als Bestandteil eines Maschinenkonzeptes einer Werkzeugmaschine mit Portalbauweise.
- Fig. 15: zeigt schematisch eine weitere Ausführungsform der Transporteinrichtung, bei der mehrere Transporteinrichtungen durch Kupplungen miteinander zu einer Einheit verbunden sind.
- Fig. 16: zeigt schematisch eine weitere Ausführungsform der erfindungsgemäßen Werkzeugmaschine mit Transporteinrichtung bei einer Positionierung und Energie- und/oder Signalverbindungsschluss unterhalb einer Werkzeugmaschine in Portalbauweise.
- Fig. 17: zeigt schematisch einen Teil der erfindungsgemäßen (modularen) Werkzeugmaschine ohne zweiten Werkzeugmaschinenaufbau, die mehrere Transporteinrichtungen mit unterschiedlichen Teilaufgaben umfasst.
- Fig. 18: zeigt schematisch eine Vielzahl an Transporteinrichtungen mit unterschiedlichen Aufgaben innerhalb einer Produktionskette, ohne Darstellung des erfindungsgemäßen ersten Werkzeugmaschinenaufbaus.

### DETAILLIERTE BESCHREIBUNG DER FIGUREN UND BEVORZUGTER AUSFÜHRUNGSBEISPIELE DER VORLIEGENDEN ERFINDUNG

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

Es sei hervorgehoben, dass die vorliegende Erfindung jedoch in keinster Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikation der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

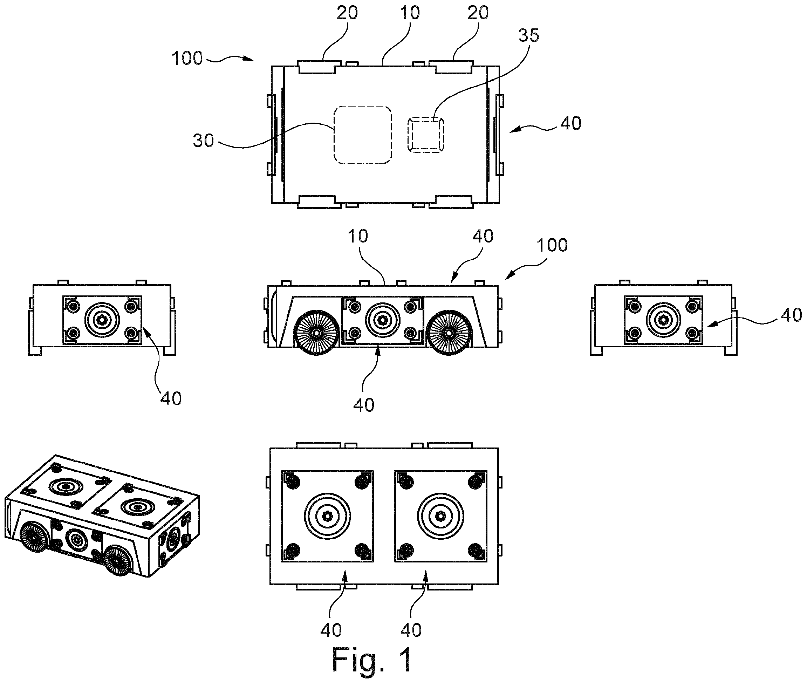

Fig. 1 zeigt schematisch eine Ausführungsform einer als fahrerloses Transportfahrzeug für den ersten Werkzeugmaschinenaufbau einsetzbaren Transporteinrichtung 100 mit Aufnahmevorrichtungen 40 zum Aufnehmen von exemplarischen Handhabungseinrichtungen und ohne Werkstückspanneinrichtung.

Die in Fig. 1 gezeigte Ausführungsform der Transporteinrichtung 100 ist in einer besonders bevorzugten Ausführungsform als Fahrerloses Transportfahrzeug (FTF) eines Fahrerlosen Transportsystems (FTS) ausgestaltet.

Dabei weist die Transporteinrichtung 100 ein Fahrgestell 10 (Plattform) und einen Antrieb 20 auf. Dabei ist das Fahrgestell zur Aufnahme eines Energiespeichers 30 eingerichtet, wobei hierfür vorzugsweise ein elektrischer Energiespeicher 30 wie eine Batterie Anwendung findet. Jedoch ist der Energiespeicher 30 nicht auf elektrische Energie beschränkt, so dass auch mechanische Energie im Bedarfsfall gespeichert werden kann in Form von z.B. unter Druck gesetzte Fluide oder Verformungsenergie (z.B. eines federnden Elementes). Weitere Energiespeicher für z.B. Hydraulik oder Pneumatik können ebenso in dem Fahrgestell 10 untergebracht sein.

Weiterhin umfasst die Transporteinrichtung 100 in besonders bevorzugter Weise Räder 20, um die Transporteinrichtung 100 z.B. in einer Werkshalle zu bewegen. Dabei können diese Räder 20 über einen Antriebsstrang (nicht dargestellt) mit einem zentralen Antriebsmotor verbunden sein, sie können aber auch jeweils über einen eigenen Antriebsmotor (z.B. einen oder mehrere Elektromotoren) verfügen, welche durch eine interne Steuerung 35 einzeln angesteuert werden können.

Ferner ist das Fahrgestell 10 vorzugsweise als Plattformträger ausgestaltet, welcher verschiedenste Aufnahmevorrichtungen 40 für Handhabungseinrichtungen (z.B. Automationskomponenten oder Transportkomponenten etc.) aufweist.

Dabei verfügt der Plattformträger besonders bevorzugt über n+1 Aufnahmevorrichtungen 40 für die verschiedenen Handhabungseinrichtungen, wobei die Aufnahmevorrichtungen 40 besonders bevorzugt am gesamten Plattformträger angeordnet sind. Insbesondere werden bevorzugt alle Seiten (Raumebenen) der Transporteinrichtung 100 für das Vorsehen einer Aufnahmevorrichtung 40 genutzt (siehe hierzu auch die verschiedenen Ansichten der Transporteinrichtung 100 in Fig. 1). Hierdurch können nun weit mehr Handhabungseinrichtungen aufgenommen und entsprechend bewegt werden als dies zum Beispiel mit einem handelsüblichen Transportfahrzeug wie einem Gabelstapler oder einem motorisierten Hubwagen möglich ist.

Jedoch sei darauf hingewiesen, dass die Anzahl und/oder die Verteilung der Aufnahmevorrichtungen 40 auf der Transporteinrichtung 100 nicht auf die in Fig. 1 gezeigte Anzahl/Verteilung beschränkt ist. Es kann beispielweise auch nur eine einzelne Aufnahmevorrichtung 40 beispielsweise auf der Oberseite der Transporteinrichtung 100 vorgesehen sein, und/oder aber auch zwei und mehr Aufnahmevorrichtungen 40 an einer oder mehreren Seiten der Transporteinrichtung 100 vorgesehen sein.

Ferner können die Aufnahmevorrichtungen 40, die auf der Oberseite der Transporteinrichtung 100 vorgesehene sind, von ihrer Größe und ihren Eigenschaften von den Aufnahmevorrichtungen 40 an den Seiten der Transporteinrichtung 100 abweichen. Dies kann beispielsweise dann vorteilhaft sein, wenn kleinere Handhabungseinrichtungen mit einem vergleichsweise geringen Gewicht an den Seiten der Transporteinrichtung 100 aufgenommen werden sollen und die schwereren Handhabungseinrichtungen vorzugsweise über den Achsen/dem Antrieb 20 der Transporteinrichtung 100 positioniert werden sollen.

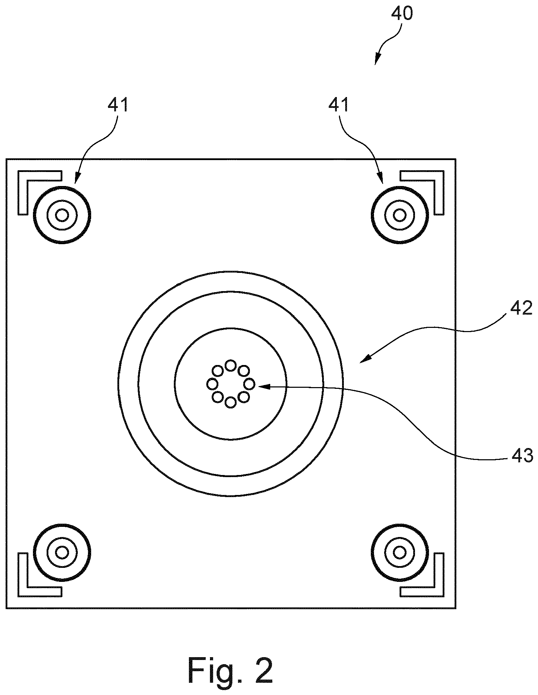

Weiterhin können beispielsweise aber auch die kleineren Aufnahmevorrichtungen 40 an den Seiten der Transporteinrichtung 100 über eine geringere Anzahl an Anschlüssen (siehe hierfür die Erläuterungen zur Fig. 2) im Vergleich zu den größeren Aufnahmevorrichtungen 40 auf der Oberseite der Transporteinrichtung 100 verfügen.

Vorzugsweise ist die Transporteinrichtung 100 mit einer Einheit zur optischen Überwachung seiner Umgebung (hier nicht gezeigt) und der angekoppelten Handhabungseinrichtungen ausgestattet. Diese Einrichtung ist vorzugsweise mit der Steuerungssoftware der internen Steuerung 35 gekoppelt und ermöglicht es auf Basis der Erkennung eine Handlung durchzuführen.

Zudem sind vorzugsweise weitere Sensoren in der Transporteinrichtung 100 verbaut, welche es ermöglichen, die Umgebung und Komponenten geeignet zu überwachen. Beispielsweise können Infrarot oder Radarsensoren eingesetzt werden.

Fig. 2 zeigt schematisch eine Detailansicht einer Aufnahmevorrichtung 40 der Transporteinrichtung 100 zum Aufnehmen von Handhabungseinrichtungen (oder jeglicher anderer Einrichtungen).

Dabei sind die Aufnahmevorrichtungen 40 vorzugsweise zur mechanischen Fixierung der Handhabungseinrichtungen, zur Signalübertragung und Energieübertragung an die jeweilige Handhabungseinrichtung eingerichtet. Es kann je nach Handhabungseinrichtung nur eine der Übertragungsmöglichkeiten oder aber auch eine beliebige Kombination daraus genutzt werden.

Ferner sind besonders bevorzugt die Aufnahmevorrichtungen 40 automatisiert ausgeführt. Somit kann die Transporteinrichtung 100 selbständig die Handhabungseinrichtungen austauschen und ist dadurch flexibel für verschiedenste Aufgaben einsetzbar. Bei automatisierten Ausführungen der Transporteinrichtung 100 eignen sich zudem insbesondere Schnellkupplungen (z.B. Frontlader-Schnellkupplung) um automatisiert eine Verbindung für Energieübertragung bzw. Signalübertragung zwischen der Transporteinrichtung 100 und der Handhabungseinrichtung herzustellen.

Wie in Fig. 2 gezeigt, können beispielsweise konenförmige Abschnitte 41 der Aufnahmevorrichtung 40 dazu vorgesehen sein, die entsprechende Handhabungseinrichtung gegenüber der Aufnahmevorrichtung 40 auszurichten und zu fixieren. Für ein derartigen Ausrichten und gleichzeitiges Fixieren der Handhabungseinrichtung an der Aufnahmevorrichtung 40 können hier vorteilhaft Spannkonen verwendet werden, wie sie beispielsweise bereits von der Aufnahme für Paletten in einer Werkzeugmaschine bekannt sind.

Weiterhin kann die Aufnahmevorrichtung 40 eine Schnittstelle 42 zur Übertragung von mechanischer Energie (beispielsweise eine Rotation eines in der Transporteinrichtung 100 vorgesehenen Motors auf die Handhabungseinrichtung) und/oder elektrischer, hydraulischer und/oder pneumatischer Energie aufweisen. Ferner könnten aber auch beispielsweise Betriebsmittel wie Kühl-Schmierstoff von der Transporteinrichtung der entsprechend an der Aufnahmevorrichtung 40 aufgenommenen Handhabungseinrichtung zugeleitet werden. Hierfür können beispielsweise entsprechende Befestigungsmittel und elektrische und/oder Fluide leitende Anschlüsse (Befestigungsmittel und Anschlüsse 43) vorgesehen sein.

Zudem kann in vorteilhafter Weise die Schnittstelle 42 eine Einrichtung zur kontaktlosen Übertragung von Signalen zwischen der Aufnahmevorrichtung 40 der Transporteinrichtung 100 und der Handhabungseinrichtung aufweisen. Diese Einrichtung zur kontaktlosen Signalübertragung kann beispielsweise als Sender-/Empfängerspule ausgebildet sein, oder aber als Induktivkoppler mit I/O-Link zur berührungslosen Übertragung der Signale.

Dabei kann die Einrichtung an jeder beliebigen Stelle an der Schnittstelle 42 oder auch außerhalb der Schnittstelle 42 vorgesehen sein, wobei in vorteilhafter Weise die Einrichtung zur kontaktlosen Signalübertragung zentral/mittig in der Schnittstelle 42 vorgesehen ist.

Es sei an dieser Stelle darauf hingewiesen, dass beispielsweise die elektrischen und/oder Fluid leitenden Anschlüsse nicht zwingend auf der Schnittstelle 42 vorgesehen sein müssen. Sie können ebenfalls außerhalb der Schnittstelle 42 vorgesehen sein, um beispielsweise die Übertragung von rotatorischer Energie von der Übertragung der elektrischen/fluiden Energie zu trennen/zu separieren.

Zudem sind in besonders bevorzugter Weise die Aufnahmevorrichtungen 40 einheitlich bzw. standardisiert ausgeführt, so dass beliebige Komponenten bzw. Handhabungseinrichtungen mit entsprechend einheitlich ausgebildeten Aufnahmeelementen angebracht werden können und dabei im Wesentlichen die gleichen Schnellkupplungen zur Energie- bzw. Signalübertragung genutzt werden können.

Weiterhin verfügen die Aufnahmevorrichtungen 40 vorzugsweise über die Möglichkeit, den Zustand der aufgenommenen Handhabungseinrichtung zu überwachen. Dazu gehören vorzugsweise die Überwachung der Spannsituation der gekoppelten Handhabungseinrichtung (beispielsweise an den Spannkonen), deren Status und Signale, sowie deren Energieübertragung.

Bei der Überwachung des Spannungszustandes können hierfür vorzugsweise eine Auflagekontrolle oder eine Spannkontrolle in den Aufnahmevorrichtungen 40 verwendet werden, wobei die Auflagekontrolle vorzugsweise über elektrische Signale den Zustand ermittelt, oder aber alternativ Blasluft dafür verwenden kann.

Beispielhaft kann die Transporteinrichtung 100 die folgenden Handhabungseinrichtungen aufnehmen: Palettenwechsler (z. B. bekannt aus Werkzeugmaschinen), Roboter, Materialpaletten, Gitterboxen und weitere Materialträger, Ablageplätze für Roboterzubehör (z. B. Wechselgreifer), Entgratstationen, Waschstationen, Werkzeuge für z. B. Werkzeugmaschinen, Staplergabel etc.

Es sei an dieser Stelle darauf hingewiesen, dass die Möglichkeiten an Handhabungseinrichtungen, die durch die Aufnahmevorrichtungen 40 der Transporteinrichtung 100 aufgenommen werden können, in keinster Weise durch die oben genannte Aufzählung erschöpft sind.

Weiterhin ist die Transporteinrichtung 100 vorteilhafterweise derart gestaltet, dass sich die Handhabungseinrichtungen beliebig miteinander kombinieren lassen, um so eine größere Flexibilität bei spezifischen Anwendungen zu ermöglichen.

Vorzugsweise verfügt die interne Steuerung 35 der Transporteinrichtung 100 über eine eigene Steuersoftware, welche die Verfahr- und Transportbewegungen steuern und überwachen kann. Die Steuersoftware könnte zum Beispiel um einzelne Softwarebausteine erweitert werden, welche für die jeweiligen Komponenten bzw. Handhabungseinrichtungen notwendig sind. Dabei kann es sich z.B. um die Anbindung einer Robotersteuerung oder um die Anbindung der Ansteuerung eines Palettenwechslers handeln.

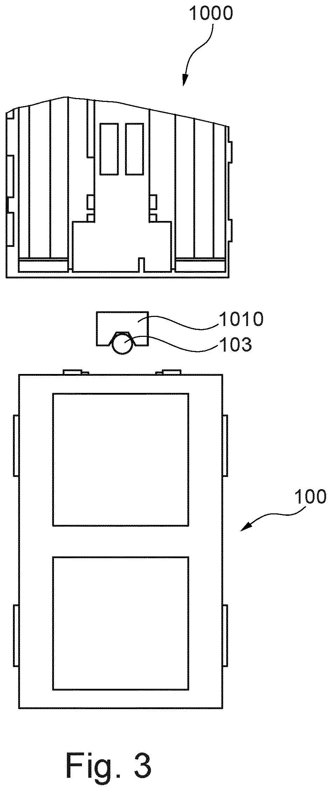

Fig. 3 zeigt schematisch eine Positionierung der Transporteinrichtung 100 an einer Werkzeugmaschine 1000 mittels eines Prismas 1010.

Dabei verfügt die Transporteinrichtung 100 ferner über ein entsprechendes Gegenstück 103 (hier ein zylindrisches Gegenstück), um in das Prisma mit dem Gegenstück 103 einzufahren und so eine genaue Positionierung vor der Werkzeugmaschine 1000 zu erreichen. Es können jedoch auch mehrere Prismen 1010 und entsprechend mehrere Gegenstücke 103 für eine derartige Positionierung der Transporteinrichtung 100 vor der Werkzeugmaschine 1000 verwendet werden, sowohl in eine Richtung positionierend (z.B. in Längsrichtung der Transporteinrichtung 100) als auch in eine Richtung senkrecht dazu (z.B. Querrichtung der Transporteinrichtung 100).

Es sei an dieser Stelle darauf hingewiesen, dass die oben genannten Ausgestaltungsmöglichkeiten der Positionierung der Transporteinrichtung 100 nicht auf die Kombination Prisma 1010 und zylindrisches Gegenstück 103 beschränkt ist. Vielmehr könnte beispielsweise ein Teil mit einer V-förmigen Kerbe (als Alternative zum Prisma 1010) ebenfalls Verwendung finden.

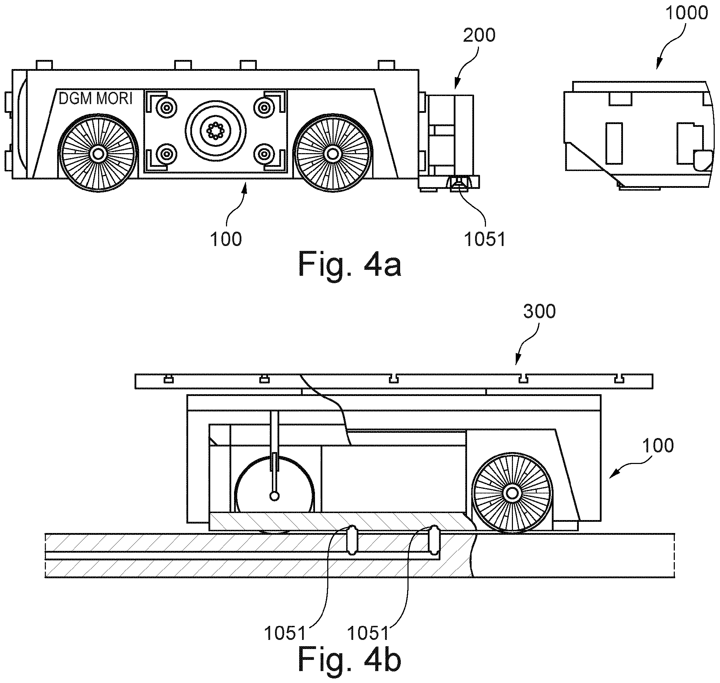

Fig. 4a zeigt schematisch eine Positionierung der Transporteinrichtung 100 an einer Werkzeugmaschine 1000 mittels konischer Aufnahmen 1051.

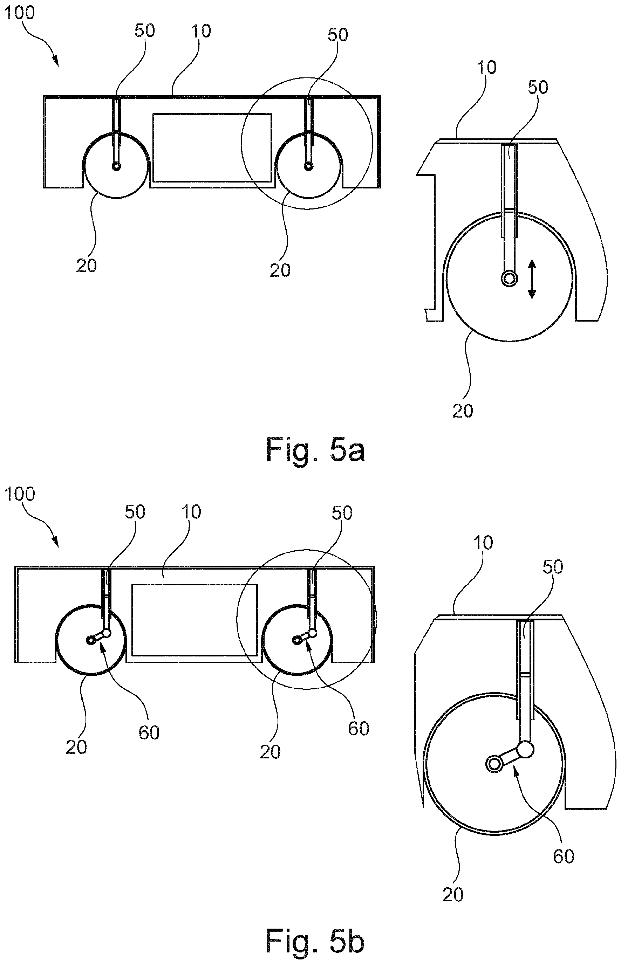

Dabei verfügt die Transporteinrichtung 100 über eine Höhenverstellung (hier nicht gezeigt, siehe dazu Figuren 5a bis 7), die es ermöglichen, die Handhabungseinrichtung (hier beispielsweise einen Palettenwechsler 200) auf die konischen Aufnahmen 1051 der Werkzeugmaschine 1000 zu setzen und so eine sehr genaue Positionierung der Handhabungseinrichtung vor der Werkzeugmaschine 1000 zu erreichen.

Ferner ermöglichen die konischen Aufnahmen 1051 eine Lastaufnahme der Handhabungseinrichtung, welche insbesondere dann von entscheidendem Vorteil ist, wenn die Handhabungseinrichtung bei ihrer Verwendung große Massen zu tragen hat, welche eventuell die Lastaufnahmefähigkeit der Transporteinrichtung 100 übersteigen würde, zum Beispiel bei Paletten 300 mit besonders großen bzw. schweren Werkstücken 1 und der auftretenden Belastung beim Entnehmen der Palette 300 mit dem Werkstück 1.

Vorzugsweise verfügt die Transporteinrichtung 100 über eine definierte Position vor der Werkzeugmaschine 1000, bzw. den Ablageplätzen 500 / Rüstplätzen. Die Positionierung kann mechanisch, signaltechnisch oder kombiniert gewährleistet sein.

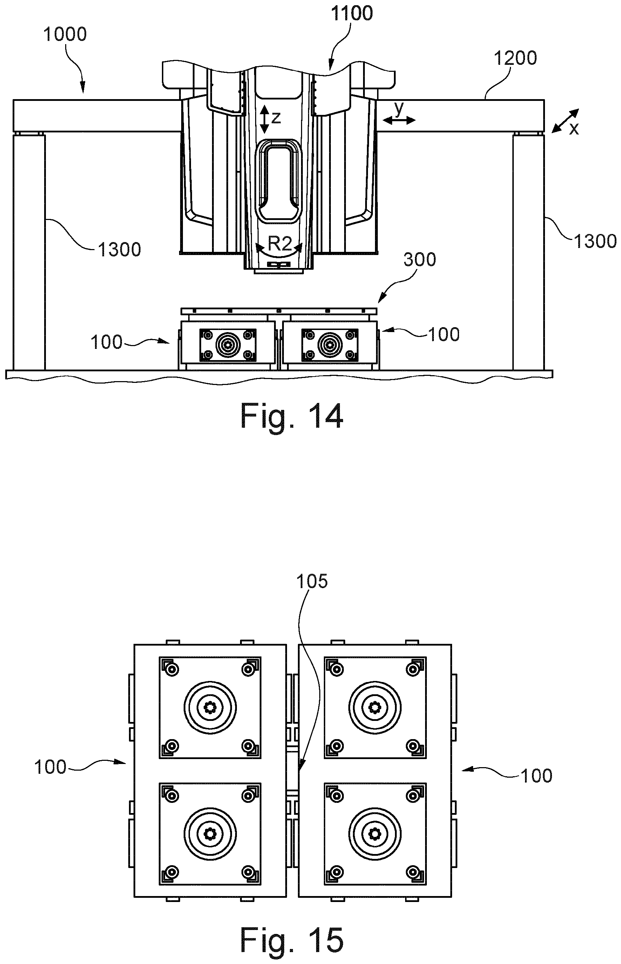

Diese Positionierung kann vorzugsweise über n mechanische Indexe via horizontal angeordneter Bewegung(en) (siehe Fig. 15) oder vertikaler Bewegung(en) ausgeführt werden. Alternativ können hierfür auch Drehbewegung(en) genutzt, die Bewegungen miteinander gekoppelt oder nacheinander ausgeführt werden.

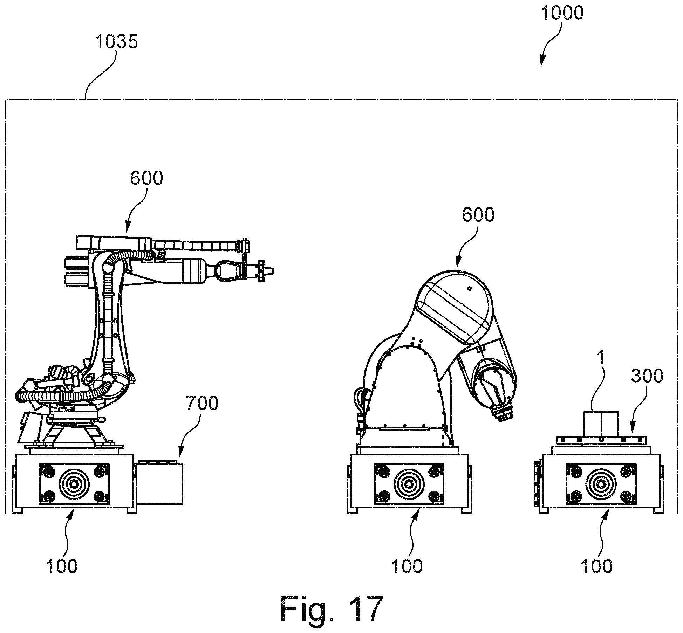

In einer beispielhaften Ausführung wird die Positionierung durch eine vertikale Bewegung gewährleistet (siehe hierzu im Detail die Figuren 17 bis 19).

Die Indexe können entweder mit den Werkzeugmaschinen 1000, den Ablageplätzen 500 und Rüstplätzen verbunden werden. Vorzugsweise werden die Indexe mit dem Hallenboden verbunden um keinerlei Störgrößen wie z. B. Schwingungen, Stöße auf die Werkzeugmaschine 1000 oder die Plätze zu bringen, während die Transporteinrichtung 100 positioniert wird.

Vorzugsweise werden die Indexe konenförmig ausgeführt (konische Aufnahmen 1051). Dadurch ist eine Positionierung in allen notwendigen Ebenen gewährleistet. Vorzugsweise sind die konischen Aufnahmen 1051 dabei so positioniert, dass sie nicht im eigentlichen Trittbereich vor der Werkzeugmaschine 1000 sind und damit den Bediener beim manuellen Arbeiten ergonomisch nicht behindern.

Vorzugsweise werden die konischen Aufnahmen 1051 dazu genutzt auch vertikal auftretende Lasten, die z. B. beim Palettenwechsel durch die zu entnehmende Palette 300 entstehen, aufzunehmen. Dadurch kann die Transporteinrichtung 100 auf die maximale Transportkapazität ausgelegt werden und muss keine durch Austauschvorgänge kurzfristig auftretenden Zusatzlasten aufnehmen.

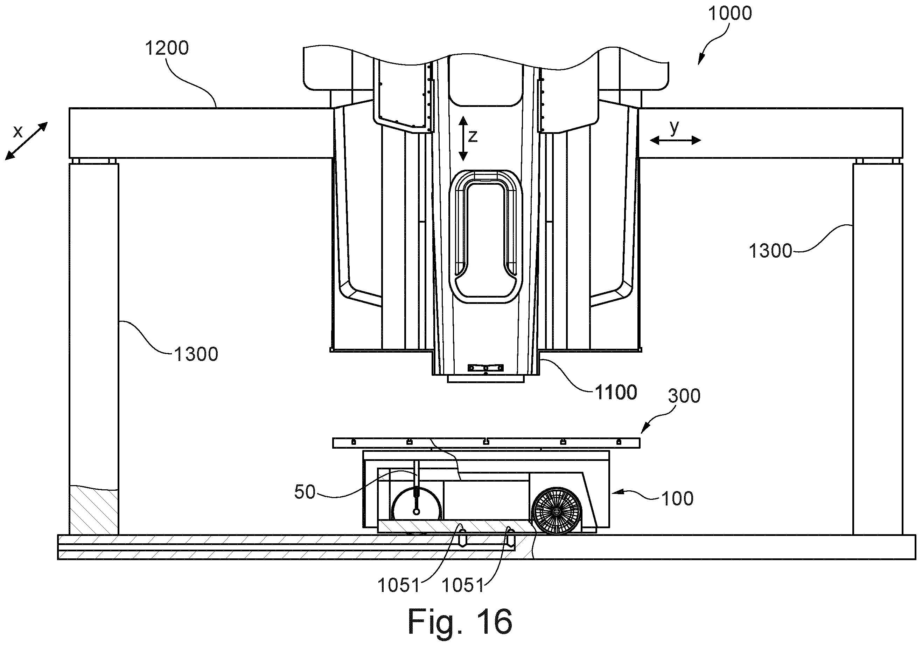

Weiterhin können die konischen Aufnahmen 1051 (siehe hierzu auch Fig. 16b und 16c) dazu genutzt werden, eine Verbindung zwischen Werkzeugmaschine 1000, Plätzen und Transporteinrichtung 100 herzustellen. Diese Verbindung kann zur Signalübertragung oder zum Energieaustausch genutzt werden, falls dies nicht berührungslos gestaltet werden kann.

Weiterhin kann die o. g. Verbindung auch durch eine weitere Aufnahme realisiert werden, welche durch den Konenhub angedockt wird.

Zudem können die konischen Aufnahmen 1051 ver- und entriegelt werden um die Positionierung zusätzlich zu stabilisieren bzw. deren Genauigkeit zu erhöhen.

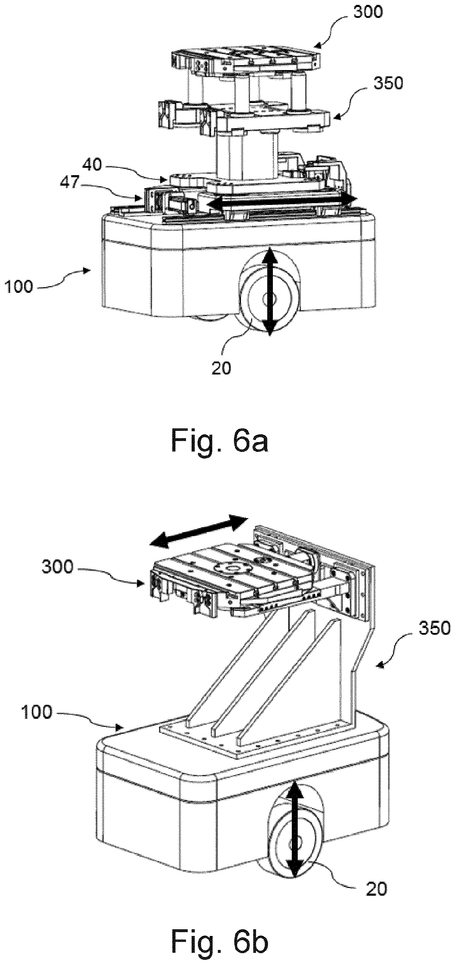

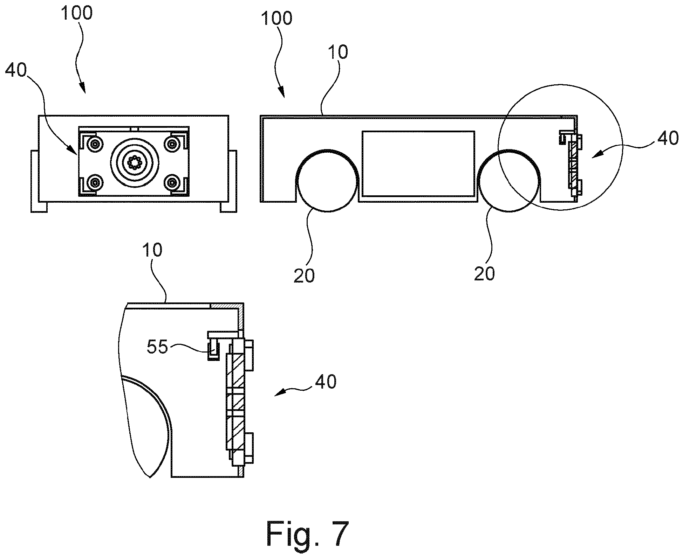

Die vertikalen Bewegungen der Transporteinrichtung 100 können durch Nutzung der auf der Transporteinrichtung 100 vorhandenen Medien angetrieben und angesteuert werden. Vorzugsweise kann jede der Aufnahmevorrichtungen 40 die Vertikalbewegung selbständig und unabhängig voneinander ausführen (siehe hierzu Fig. 7). Alternativ kann die Vertikalbewegung durch Anheben des Rahmens / Gestells des FTS relativ zu den Rädern erfolgen (siehe hierzu Figuren 5a/b und 6a/b).

Die Hubbewegung kann frei alle notwendigen Positionen anfahren um einen geeigneten Ablauf zu finden. In einer beispielhaften Ausführung sind drei Hauptpositionen vorgesehen:
Hub oben: Position in welcher die Transporteinrichtung 100 verfahren kann.
Hub Mitte: Position in welcher die Handhabungseinrichtungen auf den Konen abgelegt sind.
Hub unten: Ablegen von Handhabungseinrichtungen / Materialträgern / Boxen direkt auf dem Boden.

Weiterhin kann die Hubbewegung auch dazu genutzt werden, die Transporteinrichtung 100 auf einer Ladestation (hier nicht gezeigt) anzudocken und dort den Aufladevorgang zu ermöglichen.

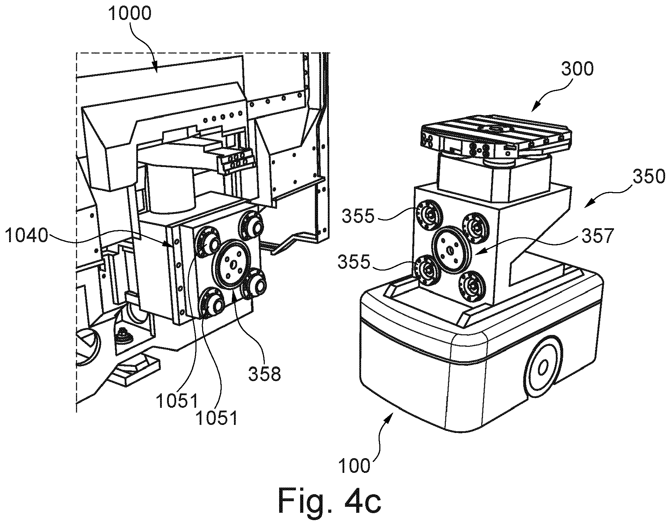

Weiterhin kann die Handhabungseinrichtung durch die Transporteinrichtung 100 temporär direkt an die Werkzeugmaschine 1000 übergeben werden. Die Handhabungseinrichtung wird dabei über die in den konischen Aufnahmen 1051 integrierte Schnittstelle (siehe hierzu auch Fig. 4b und 4c) zur Herstellung einer Verbindung von der Werkzeugmaschine 1000 versorgt und die Transporteinrichtung 100 kann weitere Aufgaben und andere Handhabungseinrichtungen übernehmen. In diesem Fall dient die Transporteinrichtung 100 als Zubringer von temporären Handhabungseinrichtungen für verschiedene Werkzeugmaschinen 1000.

Fig. 4b zeigt schematisch eine weitere Ausführungsform der Transporteinrichtung 100 bei einer Positionierung und Energie- und/oder Signalverbindungsschluss mittels konischer Aufnahmen 1051.

Dabei sind konische Aufnahmen 1051 der Werkzeugmaschine gezeigt, wobei diese, neben dem Positionieren der Transporteinrichtung 100, wenn diese sich mittels ihrer Hubzylinder (siehe hierfür Fig. 5a/b und 6a/b) über den konischen Aufnahmen 1051 absenkt, eine Verbindung schließen können, über diese zum Beispiel Energie und/oder Signale zur Steuerung bzw. Überwachung der Transporteinrichtung 100 an die Transporteinrichtung 100 und umgekehrt von der Transporteinrichtung 100 an die Werkzeugmaschine 1000 übertragen werden können.

Durch die konischen Aufnahmen 1051 könnte beispielsweise, wie hier gezeigt, die Palette 300 oder aber eine beliebige Handhabungseinrichtung präzise an der Werkzeugmaschine 1000 positioniert werden und, und das ist im besonderen Maße vorteilhaft, eine Steuerung der Transporteinrichtung 100 bzw. der aufgenommenen Palette 300 erfolgen, ohne dabei den internen Energiespeicher (hier nicht gezeigt) der Transporteinrichtung 100 zu belasten, da die Energie seitens der Werkzeugmaschine 1000 bereitgestellt und über die beschriebene Verbindung in die Transporteinrichtung 100 eingespeist wird.

Ferner kann die Transporteinrichtung 100 über eine Art Ladestation verfügen, an der es seine Energiequellen (Energiespeicher 30; hier nicht gezeigt) auffüllen oder erneuern kann. Dies kann beispielsweise durch das Andocken an den konischen Aufnahmen 1051 erfolgen.

Fig. 4c zeigt schematisch eine weitere Ausführungsform der Transporteinrichtung 100, bei der ein Palettenhalter 350 mit einer Palette 300 mittels einer Transporteinrichtung 100 an eine Palettenhalteraufnahme 1040 andockt. Dabei kann die Palettenhalteraufnahme 1040 beispielsweise an der Werkzeugmaschine 1000 vorgesehen sein.

Insbesondere unterscheidet sich diese Ausführungsform von der in Fig. 16a gezeigten dadurch, dass der Palettenhalter 350 (oder eine andere Einrichtung, die durch die Transporteinrichtung 100 transportiert wird/werden kann) durch eine Bewegung der Transporteinrichtung 100 in der horizontalen Ebene an der Palettenhalteraufnahme 1040 angedockt wird.

Das Andocken kann beispielsweise mittels konischer Aufnahmen 1051 (hier beispielsweise Spannkonen) an der Palettenhalteraufnahme 1040 oder an dem Palettenhalter 350 und entsprechend ausgebildeten konischen Vertiefungen 355 an dem Palettenhalter 350 oder an der Palettenhalteraufnahme 1040 erfolgen. Die bereits beschriebenen Vorteile wie der Ausrichtung/Zentrierung des Paletten halters 350 gegenüber der Palettenhalteraufnahme 1040 ergeben sich durch die konischen Aufnahmen 1051/ konischen Vertiefungen 355 auch hier.

Nach erfolgtem Andocken des Palettenhalters 350 (oder einer anderen Einrichtung, die durch die Transporteinrichtung 100 transportiert wird/werden kann) kann sich die Transporteinrichtung 100 beispielsweise wieder von der transportierten Einrichtung (hier Palettenhalter 350) abkoppeln und für eine andere Transportaufgabe verwendet werden.

Ferner kann der Palettenhalter 350, wie beispielsweise auch bei der Transporteinrichtung 100 selbst oder bei der Handhabungseinrichtung, eine Schnittstelle 357 zur Übertragung von mechanischer Energie und/oder elektrischer, hydraulischer und/oder pneumatischer Energie zwischen der Palettenhalteraufnahme 1040 und dem Palettenhalter 350 aufweisen. Entsprechend kann die Palettenhalteraufnahme 1040 ein Gegenstück (Schnittstelle 358) zur Schnittstelle 357 des Palettenhalters 350 aufweisen.

Ferner könnten aber auch beispielsweise Betriebsmittel wie Kühl-Schmierstoff von der Palettenhalteraufnahme 1040 dem Palettenhalter 350 zugeleitet werden. Hierfür können beispielsweise entsprechende Befestigungsmittel und elektrische und/oder Fluide leitende Anschlüsse (vergleichbar den Befestigungsmitteln und Anschlüssen 43) vorgesehen sein.

Zudem kann in vorteilhafter Weise die Schnittstelle 357 eine Einrichtung zur kontaktlosen Übertragung von Signalen zwischen der Palettenhalteraufnahme 1040 der Werkzeugmaschine 1000 (oder einer anderen Vorrichtung) und dem Palettenhalter 350 aufweisen. Diese Einrichtung zur kontaktlosen Signalübertragung kann beispielsweise als Sender-/Empfängerspule ausgebildet sein, oder aber als Induktivkoppler mit I/O-Link zur berührungslosen Übertragung der Signale.

Dabei kann die Einrichtung an jeder beliebigen Stelle an der Schnittstelle 357 oder auch außerhalb der Schnittstelle 357 vorgesehen sein, wobei in vorteilhafter Weise die Einrichtung zur kontaktlosen Signalübertragung zentral/mittig in der Schnittstelle 357 vorgesehen ist.

Es sei an dieser Stelle jedoch darauf hingewiesen, dass die als Palettenhalteraufnahme 1040 bezeichnete Aufnahme an der Werkzeugmaschine 1000 aber auch eine Vielzahl anderer Vorrichtungen, Handhabungseinrichtungen oder dergleichen, oder auch die Transporteinrichtung 100 selbst durch Andocken aufnehmen kann. Die Palettenhalteraufnahme 1040 ist damit nicht auf die Aufnahme von Palettenhaltern 350 beschränkt.

Ferner sei darauf hingewiesen, dass in besonders bevorzugter Weise die für das Andocken beschriebene Aufnahme (mit konischen Aufnahmen 1051, konischen Vertiefungen 355, und Schnittstellen 357/358) mit der Aufnahmevorrichtungen 40 (siehe Fig. 2) einheitlich bzw. standardisiert ausgeführt ist, so dass beliebige Komponenten bzw. Handhabungseinrichtungen mit entsprechend einheitlich ausgebildeten Aufnahmeelementen angebracht werden können und dabei im Wesentlichen die gleichen Schnellkupplungen zur Energie- bzw. Signalübertragung genutzt werden können.

Fig. 5a zeigt schematisch eine Ausführungsform der Transporteinrichtung 100 mit einer Höhenverstellung der Transporteinrichtung 100 mittels Hubzylindern 50.

Dabei wird das Fahrgestell 10 durch die Hubzylinder 50 gegenüber den Rädern angehoben, so dass auch die aufgenommenen Handhabungseinrichtungen in ihrer Höhe relativ zu den Rädern 20 bzw. zu der Werkzeugmaschine 1000 (hier nicht gezeigt) verändert werden.

Fig. 5b zeigt schematisch eine weitere Ausführungsform der Transporteinrichtung 100 mit einer Höhenverstellung der Transporteinrichtung mittels Hubzylindern 50.

Hierin soll eine Alternative gezeigt werden, bei der neben den Hubzylindern 50 ferner ein Fahrwerk 60 (z.B. auf Basis eines Hebelmechanismus) vorgesehen ist, um das Fahrgestell 10 der Transporteinrichtung gegenüber den Rädern 20 herauszuheben, so dass auch die mitgeführten Handhabungseinrichtungen in ihrer Höhe verändert werden.

Fig. 6a zeigt schematisch eine Ausführungsform der Transporteinrichtung 100 mit einem Palettenhalter 350 und einer Palette 300.

Dabei soll verdeutlicht werden, welche Bewegungen die Transporteinrichtung 100 bei den Absetz-/Aufnahmevorgängen zum Absetzen /Aufnehmen einer Palette 300 von einer Aufnahme 1040 (hier nicht gezeigt) vollzieht.

Dabei wird die Transporteinrichtung 100 mittels eines Mechanismus, wie in Fig. 5a und 5b gezeigt, gegenüber dem Rad bzw. den Rädern 20 angehoben (Fahrwerkhub, senkrecht dargestellter Pfeil), um entsprechend die Palette 300 und/oder den Palettenhalter 350 über einer Aufnahme 1040 zu positionieren und sie anschließend durch Absenken der Transporteinrichtung 100 auf der Aufnahme 1040 abzusetzen.

Bei der Positionierung kann es dabei zum Kontakt zwischen Palettenhalter 350 oder Palette 300 zur Ausrichtung des Palettenhalters 350/der Palette 300 gegenüber der Aufnahme kommen, so dass ferner eine Positionierbewegung (fast waagerechter Pfeil) des Palettenhalters 350 gegenüber der Aufnahmevorrichtung 40 der Transporteinrichtung 100 erfolgt. Diese Positionierbewegung kann jedoch davon abhängig sein, inwieweit ein Antrieb 47 zur Unterstützung für die Fixierung und/oder Positionierung des Palettenhalters 350 gegenüber der Aufnahmevorrichtung 40 der Transporteinrichtung 100.

Fig. 6b zeigt schematisch eine weitere Ausführungsform der Transporteinrichtung 100 mit einem Palettenhalter 350 und einer Palette 300.

Auch hier wird die Transporteinrichtung 100 mittels eines Mechanismus, wie in Fig. 5a und 5b gezeigt, gegenüber dem Rad bzw. den Rädern 20 angehoben (Fahrwerkhub, senkrecht dargestellter Pfeil), um entsprechend die Palette 300 über einer Aufnahme 1040 zu positionieren und sie anschließend durch Absenken der Transporteinrichtung 100 auf der Aufnahme 1040 abzusetzen.

Bei der Positionierung kann es dabei zum Kontakt zwischen der Palette 300 zur Ausrichtung der Palette 300 gegenüber der Aufnahme kommen, so dass ferner eine Positionierbewegung (fast waagerechter Pfeil) der Palette 300 gegenüber dem Palettenhalter 350 erfolgt. Dabei kann diese Bewegung gegen ein Druckstück wirken, das dadurch weiter eingedrückt wird und die Fixierung der Palette 300 gegenüber dem Palettenhalter 350 löst und eine Ausrichtung der Palette 300 gegenüber der Aufnahme 1040 sowie das Aufnehmen der Palette durch die Aufnahme 1040 ermöglicht.

Fig. 7 zeigt schematisch eine Ausführungsform der Transporteinrichtung 100 mit einer Höhenverstellung der Aufnahmevorrichtung 40 zur Aufnahme von Handhabungseinrichtungen der erfindungsgemäßen Transporteinrichtung 100.

Hier wiederum wird nicht die Lage des Fahrgestells 10 gegenüber den Rädern 20 der Transporteinrichtung 100 verändert, sondern die Aufnahmevorrichtung 40 ändert ihre relative Lage gegenüber dem Fahrgestell 10 bzw. gegenüber des Plattformträgers.

Dies hat den Vorteil, dass die Hubzylinder 55 kleiner ausgestaltet sein können, da sie nicht noch das Gewicht des Fahrgestells 10 und der anderen aufgenommenen Handhabungseinrichtungen und weitere Zusatzgewichte tragen müssen.

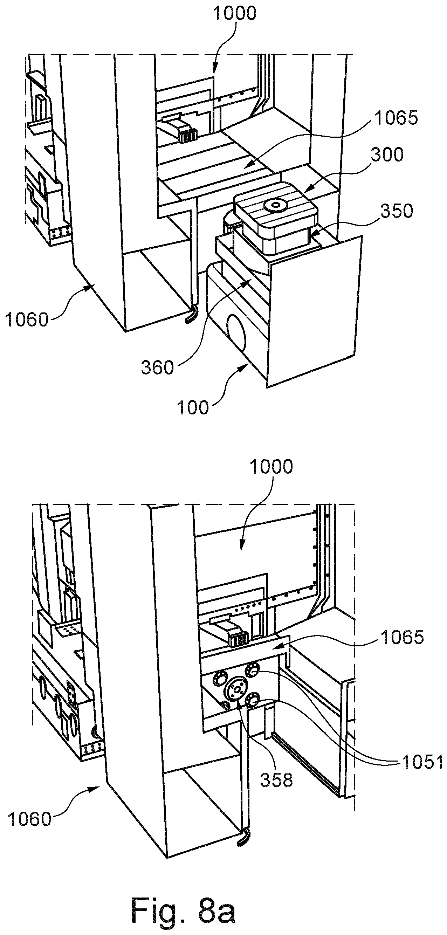

Fig. 8a zeigt eine weitere Ausführungsform der Transporteinrichtung 100, die eine Palette 300 in einen Arbeitsraum einer Werkzeugmaschine 1000 transportiert.

Dabei ist der Arbeitsraum durch eine Umhausung 1060 gegenüber der Umgebung abgegrenzt und weist an einer Seite, hier beispielsweise die Stirnseite der Werkzeugmaschine 1000, eine Öffnung auf, durch die hindurch beispielsweise ein Maschinenbediener in dem Arbeitsraum hantieren kann und durch die hindurch die Palette 300 in den Arbeitsraum der Werkzeugmaschine 1000 eingebracht wird. Zum Schließen dieser Öffnung kann beispielsweise ein Rolltor, eine Schiebetür, eine einflügelige oder zweiflügelige Drehtür oder eine vergleichbare Einrichtung verwendet werden.

Weiterhin weist die Werkzeugmaschine 1000, insbesondere die Umhausung 1060 einen Zugang auf, der sich vom Hallenboden bis hin zum Arbeitsraum erstreckt und in den die Transporteinrichtung 100 einfahren kann, um beispielsweise eine Palette 300 in den Arbeitsraum der Werkzeugmaschine 1000 einzubringen.

Damit der Zugang für die Transporteinrichtung 100 vor Spänen und/oder Kühl-Schmierstoffen geschützt ist, insbesondere während der Bearbeitung des auf der Palette 300 transportierten Werkstücks, kann die Transporteinrichtung 100 bzw. der Palettenhalter 350 zudem eine Auffangabdeckung 360 zum Auffangen der Späne und/oder des Kühl-Schmierstoffes aufweisen. In vorteilhafter Weise kann dann die Auffangabdeckung 360 den Zugang am oberen Ende (Übergang von Zugang zum Arbeitsraum) abschließen, so dass Späne und Kühl-Schmierstoff, die sich im Arbeitsraum verteilen / verteilt haben, in der Auffangabdeckung 360 der Transporteinrichtung 100 bzw. des Palettenhalters 350 aufgefangen werden.

Zudem kann es dabei möglich sein, dass eine Abdeckblende, die sich bei der Einfahrt der Transporteinrichtung 100 in den Zugang an dem dem Zugang abgewandten Ende der Transporteinrichtung 100 bzw. des Palettenhalters 350 befindet, um den Zugangvon außen zusätzlich zu verschließen, nachdem die Transporteinrichtung 100 in den Zugang der Umhausung 1060 gefahren ist.

Wird jedoch die Palette 300 durch die Transporteinrichtung 100 aus dem Arbeitsraum herausgenommen, so können noch immer Späne und Kühl-Schmierstoff beispielsweise von den Innenseiten der Wände der Umhausung 1060 abfallen/ablaufen und sich im Bereich des Zugangs sammeln. Um nun zu vermeiden, dass diese Späne/Kühl-Schmierstoffe den Zugang für die Transporteinrichtung 100 verunreinigen, kann es vorteilhaft sein, eine Stahlabdeckung 1065 an dem Übergang des Zugangs der Umhausung 1060 zu dem Arbeitsraum der Werkzeugmaschine 1000 vorzusehen, die bei Einfahrt der Transporteinrichtung 100 in den Zugang durch die Transporteinrichtung 100 (oder durch die von der Transporteinrichtung 100 getragenen Handhabungseinrichtung wie beispielsweise der Palettenhalter 350, etc.) zurückgeschoben wird, um die Palette 300 bzw. den Palettenhalter 350 in dem Arbeitsraum der Werkzeugmaschine 1000 zu positionieren/einzubringen (siehe hierfür beispielsweise das untere Bild der Fig. 8a).

Dabei kann die Stahlabdeckung in vorteilhafter Weise mehrere ineinander verschiebbare Segmente aufweisen, um im zusammengeschobenen Zustand relativ kompakt zu sein. Beim Ausfahren der Transporteinrichtung 100 aus dem Zugang kann beispielsweise ein Federmechanismus (hier nicht gezeigt) die Segmente bzw. insgesamt die Stahlabdeckung 1065 für das Verschließen des oberen Endes des Zugangs wieder herausschieben (siehe hierfür beispielsweise das obere Bild der Fig. 8a).

Ferner kann die Stahlabdeckung 1065 an ihrem Ende, das der in den Zugang einfahrenden Transporteinrichtung 100 zugewandt ist, einen Abdeckungsabschnitt aufweisen, der Ausschnitte in Form der für das Andocken genutzten Aufnahme (aufweisend die konischen Aufnahmen 1051/konischen Vertiefungen 355 und die Schnittstellen 357/358; siehe hierfür auch Fig. 4c) aufweist.

Der Abdeckungsabschnitt wird, wie die Stahlabdeckung 1065 selbst auch, beim Einfahren der Transporteinrichtung 100 verschoben, wobei durch die Ausschnitte in dem Abdeckungsabschnitt die konischen Aufnahmen 1051 und entsprechend die Schnittstelle 358 der Aufnahme der Werkzeugmaschine 1000 hindurchtritt, so dass die Transporteinrichtung 100 bzw. die von der Transporteinrichtung 100 getragene Handhabungseinrichtung (beispielsweise ein Palettenhalter 350; siehe auch Fig. 4c) an der Aufnahme der Werkzeugmaschine 1000 andocken kann.

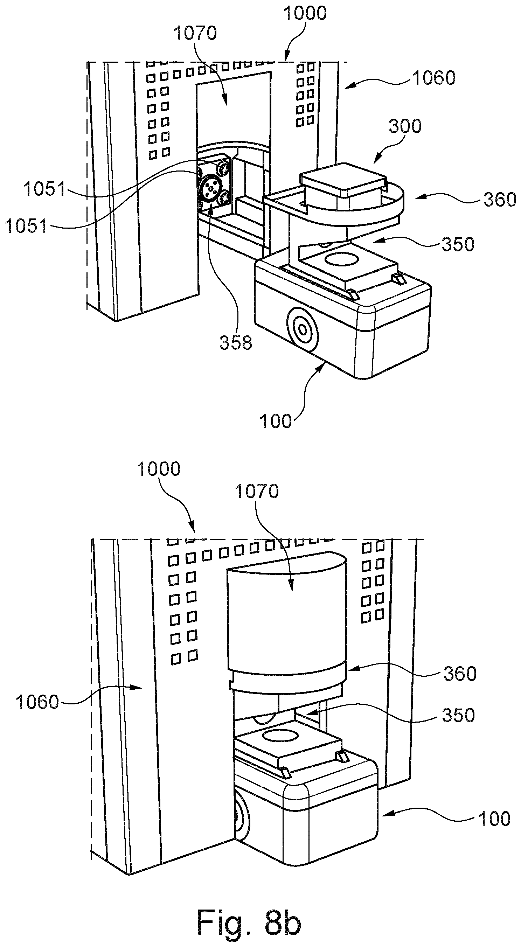

Fig. 8b zeigt eine weitere Ausführungsform der Transporteinrichtung 100, die eine Palette 300 in einen Arbeitsraum einer Werkzeugmaschine 1000 transportiert.

Dabei ist zum Verschließen der Öffnung, durch die hindurch beispielsweise ein Maschinenbediener in den Arbeitsraum der Werkzeugmaschine 1000 hineinlangen könnte bzw. durch die hindurch die Palette 300 in den Arbeitsraum der Werkzeugmaschine 1000 eingebracht wird, eine Rundtüre 1070 vorgesehen.

Befindet sich die Rundtüre 1070 im geöffneten Zustand (wie im oberen Bild der Fig. 8b gezeigt), so ist das Halbrund der Rundtüre 1070 beispielsweise der Arbeitsspindel 1100 (hier nicht gezeigt) der Werkzeugmaschine 1000 zugewandt und trennt somit die Arbeitsspindel 1100 von der Öffnung in der Umhausung 1060 ab. Dadurch kann beispielsweise verhindert werden, dass der Maschinenbediener unbeabsichtigt an ein in der Arbeitsspindel 1100 eingesetztes Werkzeug kommt und sich daran womöglich verletzt.

Für das Andocken der von der Transporteinrichtung 100 transportierten Handhabungseinrichtung (wie beispielsweise ein Palettenhalter 350 oder eine andere Einrichtung) an der Werkzeugmaschine 1000 kann, wie dies auch bereits in Fig. 4c beschrieben ist, eine Aufnahme (aufweisend die konischen Aufnahmen 1051/konischen Vertiefungen 355 und die Schnittstellen 357/358) verwendet werden.

Es können aber auch andere Verbindungsmöglichkeiten zwischen Werkzeugmaschine 1000 und Transporteinrichtung 100 bzw. Handhabungseinrichtung vorgesehen sein, wie beispielsweise konische Aufnahmen 1051, die am Hallenboden vorgesehen sind (siehe hierfür auch Fig. 4a und 4c)

Ist die Transporteinrichtung 100 mit der Palette 300 durch die Öffnung der Umhausung 1060 in den Arbeitsraum der Werkzeugmaschine 1000 eingefahren, so verschließt die Rundtüre 1070 die Öffnung der Umhausung 1060 durch eine Drehbewegung um eine Rotationsachse (wie im unteren Bild der Fig. 8b gezeigt), insbesondere durch eine Drehbewegung um die Symmetrieachse der Rundtüre 1070, die beispielsweise vertikal ausgerichtet sein kann.

In vorteilhafter Weise kann die Auffangabdeckung 360, insbesondere im Hinblick auf die Verwendung der Rundtüre 1070 zum Verschließen der Öffnung der Umhausung 1060, unter Berücksichtigung der Form der Rundtüre 1070 ausgebildet sein, um eine verbesserte Abdichtung des Arbeitsraumes der Werkzeugmaschine 1000 gegenüber der Umgebung im Hinblick auf umherfliegende Späne und Kühl-Schmierstoff zu gewährleisten.

Hierfür wäre es zudem von Vorteil, wenn ein vergleichbares Halbrund an dem Ende der Auffangabdeckung 360 des Palettenhalters 350 vorgesehen ist, an dem die Rundtüre 1070 im geschlossenen Zustand positioniert ist. So könnte eine optimierte Abdichtung zwischen Rundtüre 1070 und Auffangabdeckung 360 und somit zwischen Arbeitsraum und Umgebung der Werkzeugmaschine 1000 erfolgen.

Die für das Andocken genutzten Aufnahme an der Werkzeugmaschine 1000 (aufweisend die konischen Aufnahmen 1051 und die Schnittstelle 358; siehe hierfür auch Fig. 4c), kann dabei ohne zusätzliche Abdeckung (wie sie beispielsweise in Fig. 8a beschrieben ist) auskommen. Es kann aber auch eine Kombination aus der Stahlabdeckung 1065, wie in Fig. 20b beschrieben, und der Rundtüre 1070 verwendet werden, um eine zusätzliche Abdichtung in der Umhausung 1060 des Arbeitsraumes der Werkzeugmaschine 1000 vorzusehen.

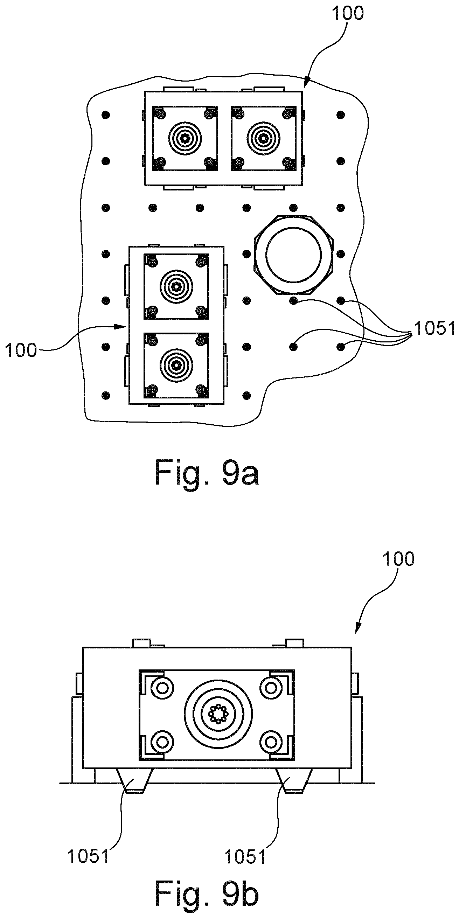

Fig. 9a zeigt schematisch einen Hallenboden mit rasterförmig angeordneten Konen 1051 zur Positionierung der Transporteinrichtungen 100 bzw. der Handhabungseinrichtungen.

Dabei können, wie bereits anhand von Fig. 4a bis 4c erläutert, die Transporteinrichtung 100 abgesenkt werden, so dass entweder die Transporteinrichtung 100 selbst oder aber die von der Transporteinrichtung 100 aufgenommene Handhabungseinrichtung mittels der Konen 1051 positioniert wird.

Eine weitere Möglichkeit besteht darin, die Konen 1051 versenkbar auszugestalten, wenn beispielsweise die Konen 1051 für die Bewegungen der Transporteinrichtungen 100 auf dem Hallenboden störend sind. Hierfür müssten die Konen 1051 über eine eigene Hubvorrichtung (beispielsweise pneumatisch, hydraulisch, elektrisch oder mechanisch) verfügen, damit sie aus dem Hallenboden heraus gehoben oder darin versenkt werden können. Zudem könnte ferner eine kombinierte Hubbewegung der Konen 1051 und der Transporteinrichtung 100 erfolgen, um die Positionierung durchzuführen.

Fig. 9b zeigt eine weitere Möglichkeit, die Konen 1051 an der Unterseite der Transporteinrichtung 100 vorzusehen und lediglich in dem Hallenboden entsprechende Vertiefungen für die Konen 1051 vorzusehen.

Hierdurch könnte nun die Hubbewegung durch die Transporteinrichtung 100 oder die Aufnahmevorrichtung 40 erfolgen, um die Positionierung durchzuführen. Ferner kann es aber auch möglich sein, dass die Konen 1051 am Unterboden der Transporteinrichtung 100 in die Vertiefungen des Hallenbodens abgesenkt werden, um eine Positionierung der Transporteinrichtung 100 bzw. der Handhabungseinrichtung zu ermöglichen.

In diesen Fällen ist keine Störkontur mehr auf dem Hallenboden vorhanden, so dass die Transporteinrichtungen 100 uneingeschränkt über den Hallenboden fahren könnten. Zudem kann bei der Ausführungsform, wie in Fig. 9b gezeigt, auf eine zusätzliche Hubvorrichtung (beispielsweise für die Konen am Hallenboden) verzichtet werden.

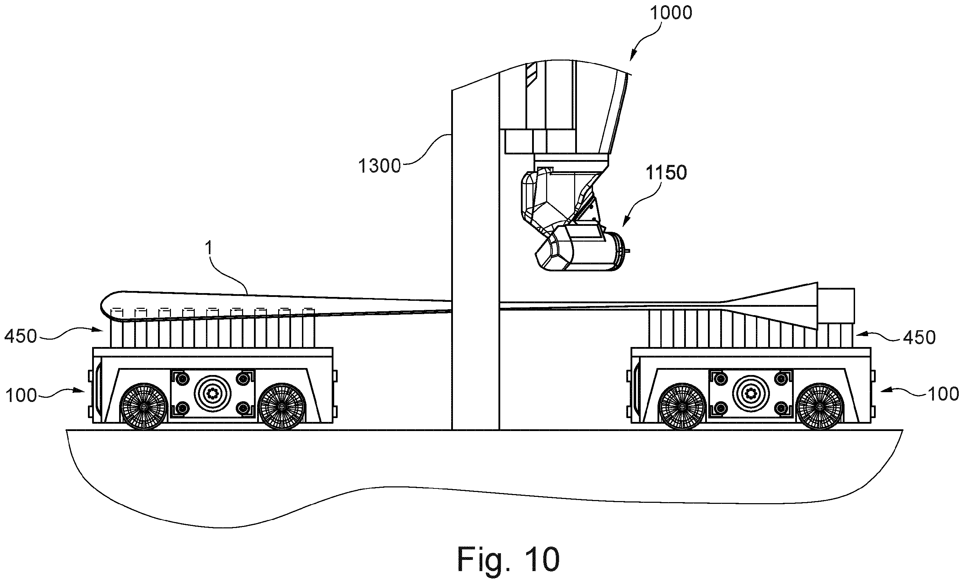

Fig. 10 zeigt schematisch eine Ausführungsform der erfindungsgemäßen Werkzeugmaschine mit Transporteinrichtung 100 mit einer Werkstückaufnahme 450 für Großteile.

Dabei können mehrere Transporteinrichtungen 100 wieder im Verbund arbeiten, um die Großteile (hier als Werkstück 1 markiert) entsprechend zu transportieren. Dafür können die Werkstückaufnahmen 450 mit Spannvorrichtungen (hydraulisch, pneumatisch, Vakuum, mechanische Spanner etc.) ausgerüstet sein, durch diese die Großteile auf den Transporteinrichtungen 100 gehalten werden und einer dafür eingerichteten Bearbeitungsmaschine (Werkzeugmaschine 1000, hier mit Ständer-elementen 1300 und einem Schleifaufsatz 1150) zugeführt werden.

Zudem können, wie bereits beschrieben, konische Aufnahmen 1051 (hier nicht gezeigt), neben der Positionierung der Transporteinrichtungen 100 unter dem Schleifaufsatz 1150 der Werkzeugmaschine 1000, wieder eine Verbindung für das Übertragen von Energie und/oder (Steuer-)Signalen von Werkzeugmaschine 1000 zu Transporteinrichtung 100 ermöglichen.

Dabei verbinden die Transporteinrichtungen 100, durch die Verwendung der Werkstückaufnahme 450, das Konzept einer Werkstückwechseleinrichtung mit einem Bearbeitungstisch zu einer Art modularen Werkzeugmaschine 1000, um die Bearbeitung von Großteilen so effizient und flexibel wie möglich zu gestalten.

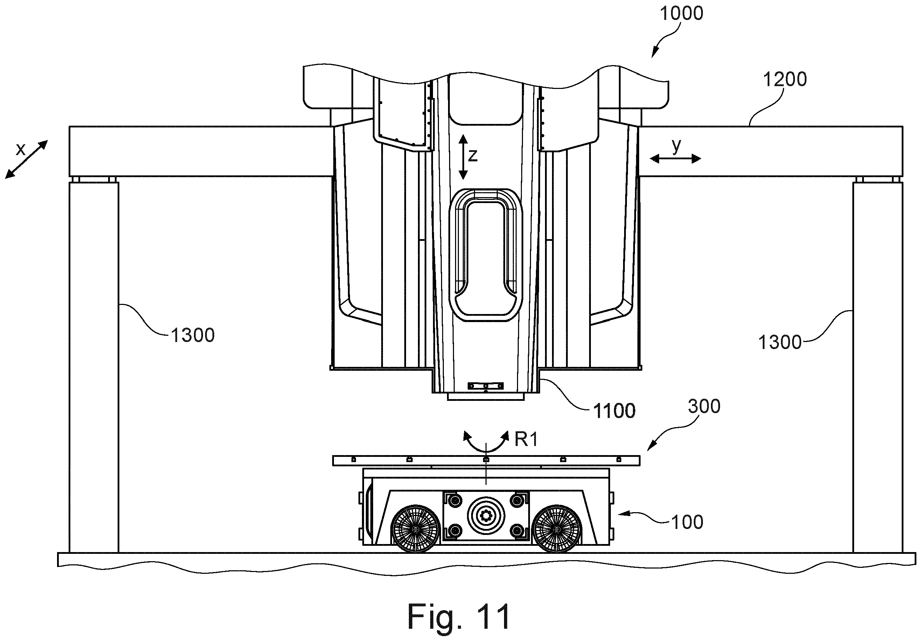

Fig. 11 zeigt schematisch eine weitere Ausführungsform der erfindungsgemäßen Werkzeugmaschine mit Transporteinrichtung 100 als Bestandteil verschiedener Maschinenkonzepte einer (modularen) Werkzeugmaschine 1000.

Dabei ist es besonders vorteilhaft, wenn die Transporteinrichtung 100 eine Palette 300 aufnimmt und dann direkt als Werkstück- / oder Maschinentischträger in einer Werkzeugmaschine 1000 genutzt werden kann.

Hierbei ergeben sich Vorteile darin, dass durch die zur Positionierung und Fixierung genutzten Konen (konische Aufnahmen, z.B. wie die bereits beschriebenen konischen Aufnahmen 1051) die Transporteinrichtung 100 direkt als Werkstück- oder Maschinentischträger genutzt werden kann (siehe hierfür auch Fig. 16). Eine Werkzeugmaschine 1000 kann somit ohne eigenen Maschinentisch ausgestattet werden.

Die Transporteinrichtung 100 kann somit als Werkstückträger mehrere Werkzeugmaschinen 1000 nacheinander anfahren und dort die jeweilige Bearbeitung (z.B. Fräsen, Schleifen,..) ohne Umspannung und damit ohne einen Genauigkeitsverlust durchführen.

Messvorgänge am Werkstück können damit direkt in der gegebenen Aufspannsituation durchgeführt werden. Die Transporteinrichtung 100 kann mitsamt des Werkstückes in den Messraum (z.B. einer Koordinatenmessmaschine o.ä.) fahren. Ein Verspannen oder Verziehen durch öffnen der Werkstückeinspannung entfällt dadurch.

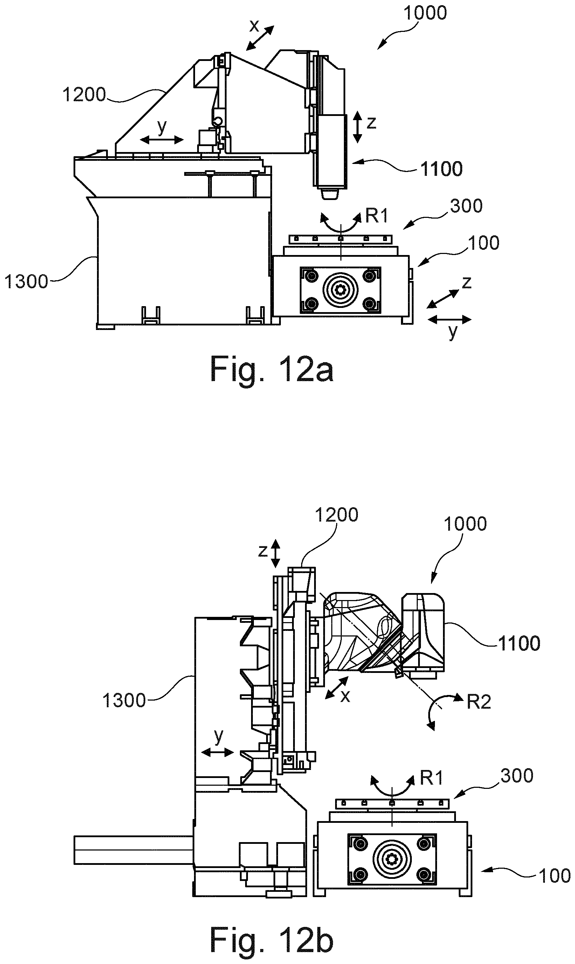

Es ergeben sich daraus völlig neue Maschinenkonzepte, wie beispielhaft bei einer Konsolmaschine (Fig. 12a) und einer Portalmaschine (Fig. 11) schematisch verdeutlicht.

Fig. 12a zeigt schematisch eine Ausführungsform der erfindungsgemäßen Werkzeugmaschine mit Transporteinrichtung 100 mit aufgenommener Palette 300 an einer Konsolmaschine als (modulare) Werkzeugmaschine 1000.

Dabei kann die von der Transporteinrichtung 100 aufgenommene Palette 300 mit einer zusätzlichen Achse (siehe Konsolmaschine; hier eine Rotationsachse R1) versehen sein, um gegebenenfalls ein Fräs-Dreh-Maschinenkonzept zu erzeugen.

Ferner kann die Verbindung von Transporteinrichtung 100 und Palette 300 (hier mit einer zusätzlichen Rotationsachse R1) als Frästisch, NC-Rundtisch, Schwenkrundtisch, als Fräs-Drehtisch oder dergleichen ausgebildet sein und so für die verschiedensten Anwendungsfälle von Werkstückbearbeitung verwendet werden.

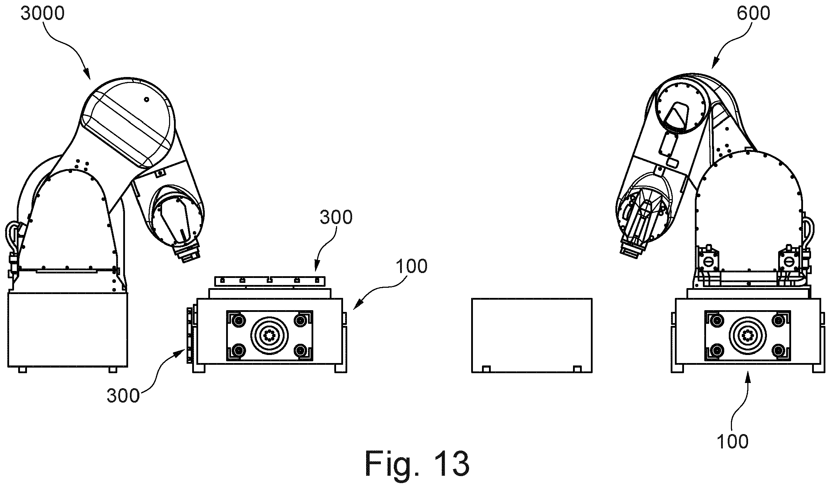

In dem gezeigten Beispiel wird außerdem eine Werkzeugmaschine 1000 in Konsolbauweise genutzt, welche neben einem Ständerelement 1300 und einem Querelement 1200 eine Arbeitsspindel 1100 aufweist, wobei die Arbeitsspindel 1100 in x-, y- und z-Richtung gegenüber dem Ständerelement verfahrbar ist. Zusätzlich kann die Transporteinrichtung 100 in x- und y-Richtung verfahren werden und kann die Palette 300 über die Rotationsachse R1 um die z-Achse herum drehen. Ferner kann die Konsolmaschine auch um eine zusätzliche Rotationsachse R2 erweitert werden, wie dies in Fig. 13b beschrieben ist.

Fig. 12b zeigt schematisch eine weitere Ausführungsform der erfindungsgemäßen Werkzeugmaschine miT Transporteinrichtung 100 als Bestandteil weiterer verschiedener Maschinenkonzepte einer (modularen) Werkzeugmaschine 1000.

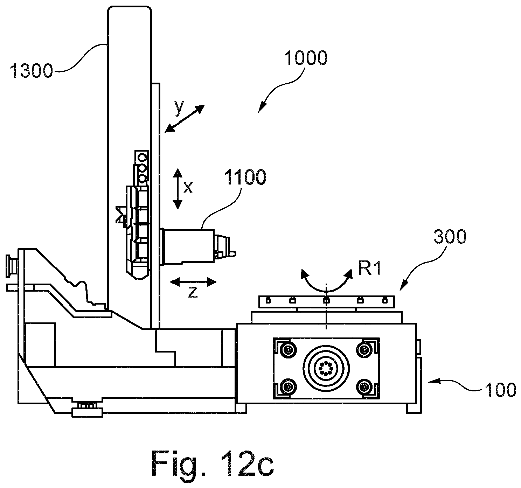

Dabei kann, wie bereits anhand der Konzepte in Fig. 11 und 12a erläutert, eine Konsolmaschine mit einer zusätzlichen Rotationsachse R2 an der Arbeitsspindel 1100 versehen sein, um die Lage der Arbeitsspindel 1100 zur Palette 300 bzw. zur Transporteinrichtung 100 um 90° durch Schwenken der Arbeitsspindel 1100 um 180° um die Rotationsachse R2 herum zu ändern. Dies ist deswegen vorteilhaft möglich, da die Rotationsachse R2 und die Ebene/Oberfläche der Palette 300 im Wesentlichen in einem 45°-Winkel zueinander stehen. Weiterhin kann aber auch, wie in Fig. 12c dargestellt, eine Anwendung der Transporteinrichtung 100 bei einem Horizontal-Bearbeitungszentrum denkbar sein, wobei dieses auch wieder um eine zusätzliche Rotationsachse R2 (hier nicht gezeigt) wie diese an der Konsolmaschine in Fig. 12a zu sehen ist, erweitert werden kann, damit auch die Arbeitsspindel 1100 des Horizontal-Bearbeitungszentrums bei Bedarf um 90° zur Palette 300 bzw. zur Transporteinrichtung 100 geschwenkt werden kann.

In beiden Fällen ist auch hier wieder die Transporteinrichtung 100 mit einer Palette 300 (in Fig. 12b und 12c jeweils mit einer Rotationsachse R1) als "Maschinentisch" eingerichtet, wobei der Maschinentisch durch die Rotationsachse R1 bei Bedarf ebenfalls als Rundtisch verwendet werden kann, um eine noch höhere Flexibilität der mit der Palette 300 ausgerüsteten Transporteinrichtung 100 zu gewährleisten. Hierdurch kann die Transporteinrichtung 100 wieder eine Bearbeitungsstation nach der anderen anfahren und wieder verlassen, um an der jeweiligen Bearbeitungsstation entsprechende Bearbeitungsschritte an dem Werkstück 1 (hier nicht gezeigt) durchführen zu lassen.

In beiden Darstellungen (Fig. 12b und 12c) werden die Arbeitsspindeln 1100 weiterhin über die Linearachsen in x-, y- und z-Richtung zur Palette 300 bzw. zur Transporteinrichtung 100 zugestellt.

Fig. 13 zeigt schematisch eine weitere Ausführungsform der Transporteinrichtung 100, die mehrere Paletten 300 bzw. Werkstücke trägt, in exemplarischer Interaktion mit einem stationären Industrieroboter 3000 zur Handhabung/Bearbeitung der Werkstücke (links) und eine weitere Ausführungsform der Transporteinrichtung 100 mit einem exemplarischen Fräsroboter 600 (rechts).

Dabei kann der im linken Bild gezeigte stationäre Industrieroboter 3000 ebenso durch eine Transporteinrichtung 100, die mit einem entsprechenden Roboter 600 als Aufsatz ausgerüstet ist, ersetzt werden und so die Flexibilität der Produktionsabläufe weiter erhöhen. In beiden Fällen (stationärer Industrieroboter 3000 oder Transporteinrichtung 100 mit Roboter 600) werden durch den Roboter die Werkstücke auf den Paletten 300 der rechten Transporteinrichtung 100 bearbeitet bzw. gehandhabt.

Der im rechten Bild gezeigte Fräsroboter 600 ist durch seine Verfahrbarkeit mithilfe der Transporteinrichtung 100 in der Lage, an eine Vielzahl von Bearbeitungsstationen innerhalb kürzester Zeit gebracht zu werden und zur Verfügung zu stehen (z.B. um bei einer fräsenden Bearbeitung eines Werkstücks in einer Werkzeugmaschine unterstützend zusätzliche Fräsarbeiten auszuführen oder vollständig allein die Fräsarbeiten durchzuführen). Ferner können mit dem fahrbaren Fräsroboter 600 auch Bauteile bearbeitet werden, die in ihrer Größe kaum oder gar nicht in einer Werkzeugmaschine aufgenommen werden könnten, so dass quasi das Bauteil nicht zur Bearbeitungsmaschine gebracht werden muss, sondern die Bearbeitungsmaschine kommt zum Bauteil. Dies erhöht zusätzlich die Flexibilität in den Produktionsabläufen.

Fig. 14 zeigt schematisch eine weitere Ausführungsform der erfindungsgemäßen Werkzeugmaschine mit mehreren Transporteinrichtungen 100 als Bestandteil eines Maschinenkonzeptes einer (modularen) Werkzeugmaschine 1000 mit Portalbauweise

Wie bereits in Fig. 11 gezeigt kann die Transporteinrichtung 100 mit einer Palette 300 bestückt in den Arbeitsbereich oder Arbeitsraum einer Werkzeugmaschine 1000 in Portalbauweise einfahren, wobei die Werkzeugmaschine 1000 das Werkstück direkt auf der durch die Transporteinrichtung eingefahrenen Palette 300 bearbeitet. Hierbei weist die Werkzeugmaschine 1000 wieder Ständerelemente 1300 sowie ein Querelement 1200 auf, an diesem die Arbeitsspindel 1100 in y- und z-Richtung verfahren werden kann. Das Querelement 1200 kann nun wiederum in x-Richtung gegenüber den Ständerelementen 1300 verfahren werden.

Insbesondere ist es vorteilhaft, wenn zum Handhaben bzw. Tragen schwerer Werkstücke mehrere Transporteinrichtungen 100 zusammen das Werkstück bzw. die Palette 300 (oder einen Maschinentisch) in die Werkzeugmaschine 1000 transportieren.

Hierfür können die Transporteinrichtungen 100 über die Palette miteinander mechanisch gekoppelt sein (siehe aber auch Fig. 16; eventuell mit einer Verbindung zum Übertragen von Signalen und/oder Energie), oder aber durch die Leitrechnersteuerung 2000 (hier nicht gezeigt) so präzise und synchron gesteuert werden, dass eine Kupplung bzw. eine Signal- und/oder Energieübertragung nicht nötig sind.

Fig. 15 zeigt schematisch eine weitere Ausführungsform der Transporteinrichtung 100, bei der mehrere Transporteinrichtungen 100 durch Kupplungen 105 miteinander zu einer Einheit verbunden sind.

Wie bereits in Fig. 14 kurz dargestellt, kann es von Vorteil sein, eine Kupplung 105 jeweils zwischen zwei Transporteinrichtungen 100 vorzusehen, um zum einen mechanische Kräfte auf beide Transporteinrichtungen 100 zu verteilen und dabei auch die Möglichkeit zu haben, sowohl Signale als auch Energie zwischen den beiden Transporteinrichtungen 100 über die Kupplung 105 auszutauschen.

Weiterhin sei an dieser Stelle angemerkt, dass anstelle der Kupplungen 105 oder in Verbindung mit den Kupplungen 105 ebenfalls die Aufnahmen 1040 zum Andocken einer Einrichtung an einer Werkzeugmaschine 1000, wie sie beispielsweise in Fig. 4c gezeigt sind, für das Verbinden/Andocken zweier (oder mehrerer) Transporteinrichtungen 100 bzw. verfahrbare Werkzeugmaschinenaufbauten miteinander verwendet werden können. Auch durch die verwendeten konischen Aufnahmen können Signale und/oder Energie übertragen werden sowie eine Verriegelung stattfinden.

Fig. 16 zeigt schematisch eine weitere Ausführungsform der erfindungsgemäßen Werkzeugmaschine mit Transporteinrichtung 100 bei einer Positionierung und Energie- und/oder Signalverbindungsschluss unterhalb einer Werkzeugmaschine 1000 in Portalbauweise.

Dabei sind, neben den bereits beschriebenen Komponenten der Werkzeugmaschine 1000, wie Ständerelemente 1300, Querelement 1200 und Arbeitsspindel 1100, auch konische Aufnahmen 1051 der Werkzeugmaschine gezeigt, wobei diese, neben dem Positionieren der Transporteinrichtung 100, wenn diese sich mittels ihrer Hubzylinder 50 über den konischen Aufnahmen 1051 absenkt, eine Verbindung schließen können, über diese zum Beispiel Energie und/oder Signale zur Steuerung bzw. Überwachung der Transporteinrichtung 100 an die Transporteinrichtung 100 und umgekehrt von der Transporteinrichtung 100 an die Werkzeugmaschine 1000 übertragen werden können.

Durch die konischen Aufnahmen 1051 kann die Palette 300 präzise unter der Werkzeugmaschine 1000 positioniert werden und, und das ist im besonderen Maße vorteilhaft, eine Steuerung der Transporteinrichtung 100 bzw. der aufgenommenen Palette 300 erfolgen, ohne dabei den internen Energiespeicher (hier nicht gezeigt) der Transporteinrichtung 100 zu belasten, da die Energie seitens der Werkzeugmaschine 1000 bereitgestellt und über die beschriebene Verbindung in die Transporteinrichtung 100 eingespeist wird.

Fig. 17 zeigt schematisch einen Teil der erfindungsgemäßen (modularen) Werkzeugmaschine 1000 ohne zweiten Werkzeugmaschinenaufbau, die mehrere erfindungsgemäße Transporteinrichtungen 100 mit unterschiedlichen Teilaufgaben umfasst.

Im Beispiel gezeigt sind dabei eine Transporteinrichtung 100 mit einer aufgenommenen Palette 300 (oder Maschinentisch, beispielweise auch mit einer zusätzlichen Rotationsachse R1) und einem darauf befindlichen Werkstück 1. In unmittelbarer Nähe davon befindet sich eine zweite Transporteinrichtung 100 mit einem Roboter 600 zur Bearbeitung des Werkstücks 1. Dafür kann der Roboter 600 über verschiedenste Werkzeuge verfügen, beispielsweise über einen Fräser, ein Schleifwerkzeug oder aber auch über ein Material auftragende Vorrichtung.

Überdies umfasst die Werkzeugmaschine 1000 eine dritte Transporteinrichtung 100 mit einem Roboter 600, der beispielsweise zum Auswechseln des von dem anderen Roboter 600 aufgenommenen Werkzeugs eingerichtet ist. Diese Transporteinrichtung kann zudem, wie bereits weiter oben beschrieben, zusätzliche Module 700 (wie Gitterboxen, Materialpaletten, weitere Materialträger, Maschinenpalette, Modul von Pufferplätze für Werkzeuge) tragen, aus denen der Roboter 600 beispielsweise Werkzeuge entnehmen und sie an den anderen Roboter 600 zur Bearbeitung des Werkstücks 1 übergeben kann.

Zudem kann die (modulare) Werkzeugmaschine 1000 über eine optionale Kabine 1035 verfügen, innerhalb dieser die Transporteinrichtungen 100 die Bearbeitung des Werkstücks 1 und das Wechseln des Werkzeugs durchführen können. Dabei kann es zudem vorteilhaft sein, wenn die optionale Kabine 1035 über Ein- und Ausgänge für die Transporteinrichtungen 100 verfügt und zudem eine Absaugung (wie beispielsweise die Absaugung 420 oder die Standard-Absaugung 1020 bei ortsfesten Werkzeugmaschinen 1000) zum Absaugen von Schmutz aus der Kabine 1035. Zusätzlich können hier auch weitere Transporteinrichtungen 100 zum Einsatz kommen, um beispielsweise eine zusätzliche Absaugung von Schmutz (beispielsweise durch die Absaugung 420), das Bereitstellen von Kühl-Schmierstoff (Modul 900 zum Auffangen bzw. Absaugen des gebrauchten Kühl-Schmierstoffes aus der Werkzeugmaschine) und/oder die Späneentsorgung (Modul zum Auffangen der Späne 800) zu gewährleisten.

Der Vorteil einer solchen (modularen) Werkzeugmaschine 1000 ist dabei, dass sie beliebig um weitere Transporteinrichtungen 100 mit weiteren Teilaufgaben ergänzt werden kann. Weiterhin ist es aber auch möglich, die (modulare) Werkzeugmaschine 1000 als Ergänzung zu einer bereits bestehenden, feststehenden Werkzeugmaschine 1000 in unmittelbarer Nähe dieser aufzubauen um beispielweise Restarbeiten (Entgraten, Schleifen, etc.) am Werkstück 1 vorzunehmen.

Ein deutlicher Vorteil einer modular aufgebauten Werkzeugmaschine 1000 besteht zudem darin, dass große Bauteile (wie beispielsweise bereits in Fig. 10 gezeigt) direkt an den das Bauteil tragenden Transporteinrichtungen 100 bearbeitet werden kann, ohne dass dabei eine Umspannung des Bauteils erfolgen muss. So können diverse (große) Bauteile in den Arbeitsbereich einer beispielsweise einen Roboter 600 mit Fräswerkzeug tragenden Transporteinrichtung 100 gefahren und dort entsprechend weiter bearbeitet werden.

Wieder können dabei für die genaue Positionierung der Transporteinrichtungen 100 zueinander am Hallenboden befindliche Konen (wie beispielsweise konenförmige Aufnahmen 1051; siehe auch Erläuterungen zu Fig. 4a, 4b, 9a, 9b und 16) genutzt werden, wobei diese, wie bereits weiter oben beschrieben, über Klemmungen verfügen können, so dass nicht nur eine genaue Positionierung der Transporteinrichtungen 100 erfolgt, sondern diese auch durch die Klemmungen gesichert wird.

Zudem können auch die Transporteinrichtungen 100 durch eine Kupplung 105 miteinander verbunden werden (beispielsweise auch zu einer Einheit), um beispielsweise sowohl Signale als auch Energie zwischen den Transporteinrichtungen 100 auszutauschen (siehe hierfür auch Erläuterungen zu Fig. 15).

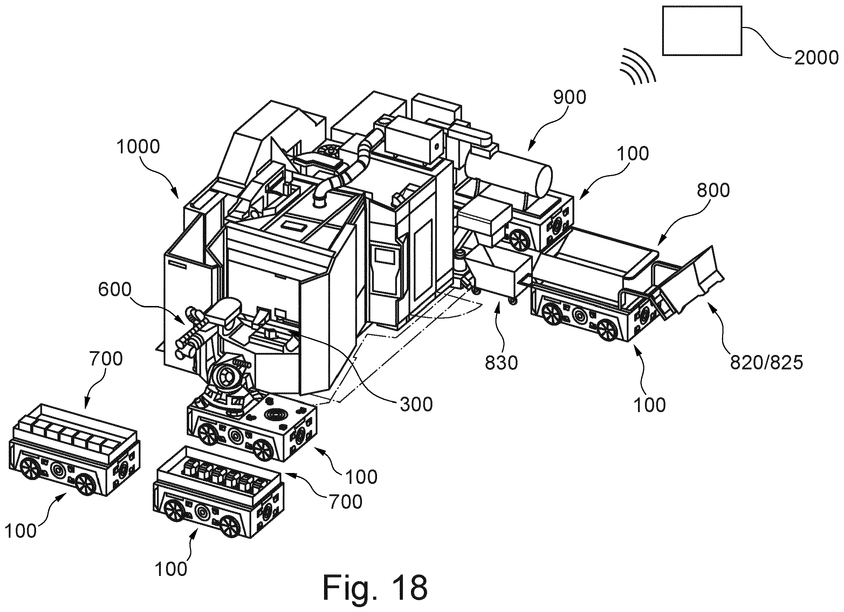

Fig. 18 zeigt schematisch eine Vielzahl an Transporteinrichtungen 100 mit unterschiedlichen Aufgaben innerhalb einer Produktionskette, ohne Darstellung des erfindungsgemäßen ersten Werkzeugmaschinenaufbaus.

Das fahrerlose Transportsystem (FTS) verfügt vorzugsweise über eine in der Leitrechnersteuerung 2000 integrierte, übergeordnete Leitrechnersoftware, welche die einzelnen Aufträge steuert und überwacht. Die Leitrechnersoftware ist vorzugsweise in der Lage n+1 Transporteinrichtungen 100 gleichzeitig zu steuern und zu überwachen.

Die Kommunikation zwischen den Transporteinrichtungen 100 und der Leitrechnersteuerung 2000 funktioniert vorzugsweise drahtlos über z. B. WLAN oder Funk.

Die Transporteinrichtung 100 verfügt vorzugsweise um eine optische Informationsquelle wie z.B. eine Statusleuchte (hier nicht gezeigt), welche als grafische Darstellung des Zustandes der Transporteinrichtung 100 dient. Hierbei wird vorzugsweise die Ampellogik verwendet. Grün= Status in Ordnung, Gelb: Störung, Rot: Problem. Alternativ kann diese Leuchte durch weitere optische Signale wie blinken auch weitere Zustände anzeigen.

Sind mehrere Transporteinrichtungen 100 im Einsatz, können diese vorzugsweise die Handhabungseinrichtungen (Roboter 600, Module 700 (wie Materialpaletten, Gitterboxen, etc.), Modul 800 zum Auffangen der Späne, Modul 900 zum Auffangen bzw. Absaugen des gebrauchten Kühl-Schmierstoffes aus der Werkzeugmaschine 1000) miteinander teilen. Dadurch wird eine noch flexiblere Automationslösung gewährleistet.

Vorzugsweise platziert die Transporteinrichtung 100 eine nicht mehr benötigte Handhabungseinrichtung an einem bekannten Platz. Dort kann eine weitere Transporteinrichtung 100 diese Handhabungseinrichtung anfahren, aufnehmen und nutzen.

Vorzugsweise verfügen die Transporteinrichtungen 100 über eine Kommunikationsmöglichkeit mit anderen Transporteinrichtungen 100. Dadurch kann z. B. auf Störquellen wie belegte Verfahrwege, auf gemeinsam genutzte Handhabungseinrichtungen und deren Standort und auf beliebige andere Informationen hingewiesen und reagiert werden. Optional übernimmt diese Aufgabe die Leitrechnersteuerung 2000.

Vorzugsweise verfügt die Transporteinrichtung 100 über eine Schnittstelle, welche die Kommunikation, Energieübertragung zu Werkzeugmaschinen 1000 oder Stationen zulässt. Vorzugsweise sind diese Schnittstellen berührungslos, können aber auch alternativ über Stecker oder Nahfeldkommunikation bewerkstelligt werden.

Dabei können die gezeigten Aufgaben ebenfalls um die vorher beschriebenen Konzepte einer modularen Werkzeugmaschine 1000 (siehe Fig. 10 bis 17) und Linearspeicher ergänzt werden, um so insgesamt eine flexible und effiziente Produktion bzw. Bearbeitung von Werkstücken zu gewährleisten.

Vorstehend wurden Beispiele bzw. Ausführungsbeispiele der vorliegenden Erfindung sowie deren Vorteile detailliert unter Bezugnahme auf die beigefügten Figuren beschrieben.

Es sei erneut hervorgehoben, dass die vorliegende Erfindungjedoch in keinster Weise auf die vorstehend beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges des unabhängigen Anspruchs umfasst sind.

Insbesondere sein an dieser Stelle darauf hingewiesen, dass die verschiedensten Ausgestaltungen und Funktionen, die die Transporteinrichtung 100 erfüllen kann, miteinander kombiniert werden können, um ein überaus flexibles Maschinenkonzept bereitzustellen, um das Bearbeiten von Werkstücken 1 noch flexibler und effizienter zu gestalten. Insbesondere können hierbei die oben genannten Konzepte der erfindungsgemäßen modularen Werkzeugmaschine um die verschiedenen, weiter oben genannten Zusatzfunktionen der Transporteinrichtung 100 sowie um das Bereitstellen und Austauschen von Werkstücken 1 und/oder Paletten 300 ergänzt werden.

Es können aber auch bereits bestehende Werkzeugmaschinen 1000 einfach um die Zusatzfunktionen und/oder um das Werkstück- und Paletten-Handling ergänzt werden. Weiterhin können aber auch modulare Werkzeugmaschinen mit feststehenden Werkzeugmaschinen kombiniert werden, um die Produktion/Bearbeitung von Werkstücken 1 flexibler zu gestalten.

Weiterhin kann beispielsweise eine Transporteinrichtung 100 sowohl Aufgaben aus dem Bereich der erfindungsgemäßen modularen Werkzeugmaschine, als auch Zusatzfunktionen zur gleichen Zeit übernehmen. Eine Transporteinrichtung ist dabei nicht auf nur einen Bereich beschränkt, sondern kann gleichzeitig verschiedenste Aufgaben aus verschiedenen Bereichen übernehmen.

Die oben genannten Möglichkeiten sind daher nicht als einschränkend aufzufassen und können im Rahmen des durch die Ansprüche definierten Schutzumfanges ausdrücklich in beliebiger Weise miteinander kombiniert werden.

### LISTE DER BEZUGSZEICHEN

- 1: Bauteil / Werkstück
- 10: Fahrgestell / Plattform
- 20: Rad
- 30: Energiespeicher
- 35: interne Steuerung
- 40: Aufnahmevorrichtung
- 41: konenförmige Abschnitte der Aufnahmevorrichtung
- 42: Schnittstelle der Aufnahmevorrichtung
- 43: Befestigungsmittel und Anschlüsse
- 47: Antrieb zum Verfahren der Vertiefungen
- 50: Hubzylinder (für Rad bzw. Fahrwerk)
- 55: Hubzylinder (für Aufnahmevorrichtung)
- 60: Fahrwerk
- 70: Stecker
- 100: Transporteinrichtung
- 103: Gegenstück (zum Prisma)
- 105: Kupplung (zwischen zwei Transporteinrichtungen)
- 300: Palette
- 350: Palettenhalter
- 355: konische Vertiefungen
- 357: Schnittstelle des Palettenhalters
- 358: Schnittstelle der Werkzeugmaschine
- 360: Auffangabdeckung
- 450: Werkstückaufnahme
- 500: Ablageplatz
- 600: Roboter / Industrieroboter
- 700: Modul (Gitterboxen, Materialpaletten, weitere Materialträger, Maschinenpalette, Modul von Pufferplätze für Werkzeuge)
- 800: Modul zum Auffangen der Späne
- 900: Modul zum Auffangen bzw. Absaugen des gebrauchten Kühl-Schmierstoffes aus der Werkzeugmaschine
- 1000: Werkzeugmaschine
- 1010: Prisma
- 1020: Standard-Absaugung
- 1035: optionale Kabine
- 1040: Palettenhalteraufnahme
- 1051: konische Aufnahme
- 1060: Umhausung
- 1065: Stahlabdeckung
- 1070: Rundtüre
- 1100: Arbeitsspindel
- 1120: Fräskopf
- 1150: Schleifaufsatz
- 1200: Querelement (Werkzeugmaschine)
- 1300: Ständerelement (Werkzeugmaschine)
- 2000: Leitrechnersteuerung
- 3000: stationärer Roboter

## Patentansprüche

1. Werkzeugmaschine (1000) zum spanenden Bearbeiten eines Werkstücks (1), umfassend:
- zumindest einen auf einer Grundfläche verfahrbaren ersten Werkzeugmaschinenaufbau, der ein fahrerloses Transportfahrzeug umfasst; und
- zumindest einen auf der Grundfläche aufstellbaren, stationären zweiten Werkzeugmaschinenaufbau, der eine werkzeugtragende Arbeitsspindel (1100) aufweist;
**dadurch gekennzeichnet, dass**
das fahrerlose Transportfahrzeug des ersten Werkzeugmaschinenaufbaus eingerichtet ist, zur Positionierung des ersten Werkzeugmaschinenaufbaus am zweiten Werkzeugmaschinenaufbau unabhängig von einer Art Schienensystem oder dergleichen auf der Grundfläche frei verfahren zu werden;
und die Werkzeugmaschine (1000) als modulare Werkzeugmaschine ausgeführt ist, dergestalt, dass der erste Werkzeugmaschinenaufbau und der zweite Werkzeugmaschinenaufbau zusammen die zur Bearbeitung eines Werkstücks (1) eingerichtete Werkzeugmaschine (1000) ausbilden, wenn der erste Werkzeugmaschinenaufbau an dem zweiten Werkzeugmaschinenaufbau positioniert ist, wobei
der erste Werkzeugmaschinenaufbau eine Werkstückspanneinrichtung umfasst,
und die Werkzeugmaschine (1000) zur Bearbeitung eines auf dem ersten Werkzeugmaschinenaufbau aufgespannten Werkstücks (1) durch die werkzeugtragende Arbeitsspindel (1100) des zweiten Werkzeugmaschinenaufbaus eingerichtet ist, nachdem der erste Werkzeugmaschinenaufbau verfahren und am zweiten Werkzeugmaschinenaufbau positioniert wurde.

2. Werkzeugmaschine (1000) gemäß Anspruch 1, **dadurch gekennzeichnet, dass**
die Werkstückspanneinrichtung des ersten Werkzeugmaschinenaufbaus ein Werkstückspanntisch ist, der insbesondere als Drehtisch, Rundtisch und/oder Schwenk-/Rundtisch ausgebildet ist.

3. Werkzeugmaschine (1000) gemäß Anspruch 1 oder 2, **dadurch gekennzeichnet, dass** der erste Werkzeugmaschinenaufbau eine zum Andocken an eine Andockstation des zweiten Werkzeugmaschinenaufbaus eingerichtete Andockeinrichtung umfasst, und die Werkzeugmaschine (1000) zur Bearbeitung des auf dem ersten Werkzeugmaschinenaufbau aufgespannten Werkstücks (1) eingerichtet ist, wenn der erste Werkzeugmaschinenaufbau weiterhin an der Andockstation des zweiten Werkzeugmaschinenaufbaus angedockt ist.

4. Werkzeugmaschine (1000) gemäß Anspruch 3, **dadurch gekennzeichnet, dass**
der erste Werkzeugmaschinenaufbau weiterhin dazu eingerichtet ist, mittels der Andockeinrichtung an einer auf der Grundfläche installierten Andockstation einer weiteren Werkzeugmaschine anzudocken.

5. Werkzeugmaschine (1000) gemäß Anspruch 3 oder 4, **dadurch gekennzeichnet, dass**
der erste Werkzeugmaschinenaufbau weiterhin dazu eingerichtet ist, mittels der Andockeinrichtung an einer Andockstation zumindest eines dritten Werkzeugmaschinenaufbaus anzudocken und zusammen mit dem dritten Werkzeugmaschinenaufbau eine weitere zur Bearbeitung des Werkstücks eingerichtete Werkzeugmaschine auszubilden, wenn der erste Werkzeugmaschinenaufbau an der Andockstation des dritten Werkzeugmaschinenaufbaus angedockt ist.

6. Werkzeugmaschine (1000) gemäß einem der vorstehenden Ansprüche, **dadurch gekennzeichnet, dass** die Werkzeugmaschine (1000) zur bohrenden und/oder fräsenden Werkstückbearbeitung eingerichtet ist.

7. Werkzeugmaschine (1000) gemäß einem der vorstehenden Ansprüche, **dadurch gekennzeichnet, dass**
die Werkzeugmaschine (1000) zur materialauftragenden Werkstückbearbeitung eingerichtet ist, wobei der zweite Werkzeugmaschinenaufbau eine Material auftragende Bearbeitungseinheit aufweist.

8. Werkzeugmaschine (1000) gemäß einem der vorstehenden Ansprüche, **dadurch gekennzeichnet, dass**
der zweite Werkzeugmaschinenaufbau ein Maschinengestell (1300) aufweist, an dem ein oder mehrere Werkzeugmaschinenbauteile angeordnet sind.

9. Werkzeugmaschine (1000) gemäß Anspruch 8, **dadurch gekennzeichnet, dass**
der zweite Werkzeugmaschinenaufbau ein oder mehrere an dem Maschinengestell (1300) verfahrbare Werkzeugmaschinenschlitten aufweist.

10. Werkzeugmaschine (1000) gemäß Anspruch 9, **dadurch gekennzeichnet, dass** zumindest einer der einen oder mehreren Werkzeugmaschinenschlitten die Arbeitsspindel (1100) oder einen die Arbeitsspindel (1100) tragenden Spindelkopf oder Spindelschwenkkopf trägt.

11. Werkzeugmaschine (1000) gemäß einem der Ansprüche 8 bis 10, **dadurch gekennzeichnet, dass**
das Maschinengestell (1300) in Portalbauweise, in Fahrständerbauweise oder in Konsolbauweise ausgestaltet ist.

12. Werkzeugmaschine (1000) gemäß Anspruch 9 oder 10, **dadurch gekennzeichnet, dass**
zumindest einer der einen oder mehreren Werkzeugmaschinenschlitten eine Horizontalbearbeitungs-Arbeitsspindel und/oder eine Vertikalbearbeitungs-Arbeitsspindel trägt.

13. Werkzeugmaschine (1000) gemäß einem der Ansprüche 9 bis 12, **dadurch gekennzeichnet, dass**
eine oder mehrere Arbeitsspindeln (1100) zumindest eines der einen oder mehreren Werkzeugmaschinenschlitten um eine oder mehrere Rotationsachsen (R2) schwenkbar bzw. drehbar ausgebildet sind.

14. Werkzeugmaschine (1000) gemäß einem der vorstehenden Ansprüche, **gekennzeichnet durch**:
- einen Antrieb zum Verfahren des Transportfahrzeugs des ersten Werkzeugmaschinenaufbaus, und
- eine Steuereinheit (35) zum Steuern des Transportfahrzeugs des ersten Werkzeugmaschinenaufbaus.

15. System umfassend eine oder mehrere Werkzeugmaschinen (1000) gemäß einem der vorstehenden Ansprüche.

## Claims

1. A machine tool (1000) for machining a workpiece (1), comprising:
- at least one first machine tool structure which can be moved on a base surface and comprises a driverless transport vehicle; and
- at least one stationary second machine tool structure which can be set up on the base surface and comprises a tool-carrying work spindle (1100);
**characterized in that**
said driverless transport vehicle of the first machine tool structure is configured to be moved freely on the base surface for positioning the first machine tool structure on the second machine tool structure independently of a type of rail system or the like; and
said machine tool (1000) is configured as a modular machine tool such that the first machine tool structure and the second machine tool structure together form said machine tool (1000) configured to machine a workpiece (1) when the first machine tool structure is positioned on the second machine tool structure,
wherein
said first machine tool structure comprises a workpiece clamping device, and
said machine tool (1000) is configured to machine a workpiece (1) clamped on the first machine tool structure by means of said tool-carrying work spindle (1100) of the second machine tool structure after the first machine tool structure has been moved and positioned on the second machine tool structure.

2. The machine tool (1000) according to claim 1, **characterized in that**
the workpiece clamping device of the first machine tool structure is a workpiece clamping table, particularly configured as a rotary table, round table and/or swivel/round table.

3. The machine tool (1000) according to claim 1 or 2, **characterized in that**
the first machine tool structure comprises a docking device configured to dock to a docking station of the second machine tool structure, and the machine tool is set up to machine said workpiece (1) clamped on the first machine tool structure when the first machine tool structure is still docked at the docking station of the second machine tool structure.

4. The machine tool (1000) according to claim 3, **characterized in that**
said first machine tool structure is further configured to dock to a docking station of another machine tool installed on the base surface by means of the docking device.

5. The machine tool (1000) according to claim 3 or 4, **characterized in that**
said first machine tool structure is further configured to dock to a docking station of at least one third machine tool structure by means of the docking device and to form another machine tool set up for machining the workpiece together with the third machine tool structure when the first machine tool structure is docked at the docking station of the third machine tool structure.

6. The machine tool (1000) according to one of the preceding claims, **characterized in that**
said machine tool (1000) is configured for drilling and/or milling workpiece processing.

7. The machine tool (1000) according to one of the preceding claims, **characterized in that**
said machine tool (1000) is configured for material-applying workpiece processing, the second machine tool structure including a material-applying processing unit.

8. The machine tool (1000) according to one of the preceding claims, **characterized in that**
said second machine tool structure includes a machine frame (1300) on which one or more machine tool components are arranged.

9. The machine tool (1000) according to claim 8, **characterized in that**
said second machine tool structure includes one or more machine tool slides that can be moved on said machine frame (1300).

10. The machine tool (1000) according to claim 9, **characterized in that**
at least one of the one or more machine tool slides carries a work spindle (1100) or a spindle head or spindle swivel head carrying a work spindle (1100).

11. The machine tool (1000) according to one of claims 8 to 10, **characterized in that**
said machine frame (1300) is configured in a portal design, in a moving column design or in a console design.

12. The machine tool (1000) according to claim 9 or 10, **characterized in that**
at least one of the one or more machine tool slides carries a horizontal processing work spindle and/or a vertical processing work spindle.

13. The machine tool (1000) according to one of claims 9 to 12, **characterized in that**
one or more work spindles (1100) of at least one of the one or more machine tool slides are pivotable or rotatable about one or more axes of rotation (R2).

14. The machine tool (1000) according to one of the preceding claims, **characterized by**:
- a drive for moving the transport vehicle of the first machine tool structure, and
- a control unit (35) for controlling the transport vehicle of the first machine tool structure.

15. A system comprising one or more machine tools (1000) according to one of the preceding claims.

## Revendications

1. Machine-outil (1000) pour l'usinage par enlèvement de copeaux d'une pièce (1), comprenant :
- au moins une première structure de machine-outil déplaçable sur une surface de base, qui comprend un véhicule de transport sans conducteur ; et
- au moins une deuxième structure de machine-outil fixe, pouvant être posée sur la surface de base, qui présente une broche de travail (1100) portant un outil ;
**caractérisée en ce que**
le véhicule de transport sans conducteur de la première structure de machine-outil est configuré, pour le positionnement de la première structure de machine-outil sur la deuxième structure de machine-outil, pour être déplacé librement sur la surface de base indépendamment d'un type de système de rails ou similaire ;
et la machine-outil (1000) est conçue sous la forme d'une machine-outil modulaire, de telle sorte que la première structure de machine-outil et la deuxième structure de machine-outil réalisent conjointement la machine-outil (1000) configurée pour l'usinage d'une pièce (1), lorsque la première structure de machine-outil est positionnée sur la deuxième structure de machine-outil, dans laquelle
la première structure de machine-outil comprend un dispositif de serrage de pièce,
et la machine-outil (1000) est configurée pour l'usinage d'une pièce (1) serrée sur la première structure de machine-outil par la broche de travail (1100) portant un outil de la deuxième structure de machine-outil après que la première structure de machine-outil a été déplacée et positionnée sur la deuxième structure de machine-outil.

2. Machine-outil (1000) selon la revendication 1, **caractérisée en ce que**
le dispositif de serrage de pièce de la première structure de machine-outil est une table de serrage de pièce, qui est réalisée en particulier sous la forme d'une table tournante, table circulaire et/ou table pivotante/circulaire.

3. Machine-outil (1000) selon la revendication 1 ou 2, **caractérisée en ce que** la première structure de machine-outil comprend un dispositif d'arrimage configuré pour l'arrimage à une station d'accueil de la deuxième structure de machine-outil, et la machine-outil (1000) est configurée pour l'usinage de la pièce (1) serrée sur la première structure de machine-outil, lorsque la première structure de machine-outil est en outre arrimée à la station d'accueil de la deuxième structure de machine-outil.

4. Machine-outil (1000) selon la revendication 3, **caractérisée en ce que**
la première structure de machine-outil est configurée en outre pour s'arrimer au moyen du dispositif d'arrimage à une station d'accueil d'une autre machine-outil installée sur la surface de base.

5. Machine-outil (1000) selon la revendication 3 ou 4, **caractérisée en ce que**
la première structure de machine-outil est configurée en outre pour s'arrimer au moyen du dispositif d'arrimage à une station d'accueil au moins d'une troisième structure de machine-outil et pour réaliser conjointement avec la troisième structure de machine-outil une autre machine-outil configurée pour l'usinage de la pièce, lorsque la première structure de machine-outil est arrimée à la station d'accueil de la troisième structure de machine-outil.

6. Machine-outil (1000) selon l'une quelconque des revendications précédentes, **caractérisée en ce que** la machine-outil (1000) est configurée pour l'usinage de pièce par perçage et/ou fraisage.

7. Machine-outil (1000) selon l'une quelconque des revendications précédentes, **caractérisée en ce que**
la machine-outil (1000) est configurée pour l'usinage de pièce par application de matière, dans laquelle la deuxième structure de machine-outil présente une unité d'usinage appliquant une matière.

8. Machine-outil (1000) selon l'une quelconque des revendications précédentes, **caractérisée en ce que**
la deuxième structure de machine-outil présente un bâti de machine (1300), sur lequel sont disposés un ou plusieurs composants de machine-outil.

9. Machine-outil (1000) selon la revendication 8, **caractérisée en ce que**
la deuxième structure de machine-outil présente un ou plusieurs coulisseaux de machine-outil déplaçables sur le bâti de machine (1300).

10. Machine-outil (1000) selon la revendication 9, **caractérisée en ce que**
au moins un des un ou plusieurs coulisseaux de machine-outil porte la broche de travail (1100) ou une tête de broche ou tête pivotante de broche portant la broche de travail (1100).

11. Machine-outil (1000) selon l'une quelconque des revendications 8 à 10, **caractérisée en ce que**
le bâti de machine (1300) est développé selon une construction de portique, selon une construction de poste de pilotage ou selon une construction de console.

12. Machine-outil (1000) selon la revendication 9 ou 10, **caractérisée en ce qu'**au moins un des un ou plusieurs coulisseaux de machine-outil porte une broche de travail à usinage horizontal et/ou une broche de travail à usinage vertical.

13. Machine-outil (1000) selon l'une quelconque des revendications 9 à 12, **caractérisée en ce que**
une ou plusieurs broches de travail (1100) d'au moins un des un ou plusieurs coulisseaux de machine-outil sont réalisées de manière à pouvoir pivoter ou à pouvoir tourner autour d'un ou plusieurs axes de rotation (R2).

14. Machine-outil (1000) selon l'une quelconque des revendications précédentes, **caractérisée par** :
- un entraînement pour le déplacement du véhicule de transport de la première structure de machine-outil, et
- une unité de commande (35) pour la commande du véhicule de transport de la première structure de machine-outil.

15. Système comprenant une ou plusieurs machines-outils (1000) selon l'une quelconque des revendications précédentes.
